# EUROPEAN PATENT APPLICATION

(11) **EP 4 426 000 A1**
(43) Date of publication of application: **04.09.2024**
(21) Application number: 22903269.3
(22) Date of filing: 30.11.2022
(51) Int. Cl.: H04W 28/02

(54) **COMMUNICATION METHOD, APPARATUS AND SYSTEM**

(30) Priority: 09.12.2021 CN 202111501215
(71) Applicant: Huawei Technologies Co., Ltd., Shenzhen, Guangdong 518129 (CN)
(72) Inventor: ZHAO, Pengtao, Shenzhen, Guangdong 518129 (CN); LI, Yan, Shenzhen, Guangdong 518129 (CN)
(74) Representative: Thun, Clemens
(86) International application number: PCT/CN2022/135227
(87) International publication number: WO 2023/103847

(57) **Abstract**

Embodiments of this application provide a communication method, apparatus, and system. In the communication method, through capability exposure of a radio access network device, the radio access network device may obtain a congestion parameter of a radio access network based on indication information, to determine whether congestion occurs in the radio access network. In addition, the radio access network device may send the congestion parameter to a proxy entity, and the proxy entity may identify the congestion parameter of the radio access network, so that congestion control on a wireless network can be optimized.

## Description

This application claims priority to Chinese Patent Application No. 202111501215.8, filed with the China National Intellectual Property Administration on December 9, 2021 and entitled "COMMUNICATION METHOD, APPARATUS, AND SYSTEM", which is incorporated herein by reference in its entirety.

### TECHNICAL FIELD

This application relates to the field of communication technologies, and in particular, to a communication method, apparatus, and system.

### BACKGROUND

A communication network is in a shared environment, and therefore the network may be congested due to multi-party communication. To prevent data sent by a sender from filling the entire network, a congestion control mechanism is introduced. In the congestion control mechanism, a congestion window is defined to adjust an amount of data to be sent by the sender. The congestion window is a state variable that the sender needs to maintain. The congestion window may dynamically change according to a congestion degree of the network. When the congestion degree is high due to multi-user contention, a size of the congestion window is reduced. When the congestion degree of the network is low, the size of the congestion window is kept within a threshold range. However, different from a wired network, a mobile communication network may be congested due to congestion on a wireless side (for example, congestion caused by retransmission on the wireless side) in addition to the multi-user contention. The congestion on the wireless side is worthy of attention.

### SUMMARY

Embodiments of this application provide a communication method, apparatus, and system. The communication method can optimize congestion control on a wireless network based on a congestion control mechanism and a transport layer proxy mechanism of a wired network through capability exposure on a wireless side.

According to a first aspect, an embodiment of this application provides a communication method. The communication method is implemented through interaction between a radio access network device and a proxy entity. The radio access network device obtains a congestion parameter of a radio access network based on indication information, and sends the congestion parameter to the proxy entity. Correspondingly, the proxy entity receives the congestion parameter, and performs a congestion control operation based on the congestion parameter. According to the method, the congestion parameter of the radio access network (including buffer status information and/or a congestion cause value of the radio access network) may be obtained through capability exposure of the radio access network device, so as to determine whether congestion occurs in the radio access network. In addition, the congestion parameter of the radio access network may be identified by using the proxy entity, so that congestion control on a wireless network can be optimized.

In a possible implementation, the radio access network device sends the congestion parameter to the proxy entity in a channel associated mode, where the channel associated mode is adding the congestion parameter to a first data flow from a terminal device. According to the method, the radio access network device may directly add the congestion parameter to an uplink data flow, and transmit the congestion parameter to the proxy entity by using the uplink data flow. This helps simplify a processing procedure.

In a possible implementation, the channel associated mode is adding the congestion parameter to a general packet radio service tunneling protocol user plane G-TPU header or a transport layer protocol header of a first data packet in the first data flow. According to the method, when the congestion parameter is carried in the G-TPU header, a 3GPP protocol header may be reused; or when the congestion parameter is carried in the transport layer protocol header, an existing uplink data packet may be reused.

In a possible implementation, the radio access network device generates a second data packet (the second data packet includes the congestion parameter), and sends the second data packet to the proxy entity. According to the method, the radio access network device may generate the second data packet, where the second data packet does not include service data of an uplink data flow, and therefore the radio access network device does not need to wait for the uplink data flow. This helps send congestion information to the proxy entity more quickly.

In a possible implementation, the radio access network device sends the congestion parameter to a terminal device, and then receives a third data packet from the terminal device, where the third data packet includes the congestion parameter; and the radio access network device sends the third data packet to the proxy entity. According to the method, the radio access network device may send the congestion parameter to the terminal device, and the terminal device generates or reconstructs the third data packet, so as to send congestion information to the proxy entity.

In a possible implementation, the radio access network device sends the congestion parameter to the proxy entity by using a user plane function network element. In other words, the proxy entity and the user plane function network element may be two separately deployed entities. The user plane function network element may forward the congestion parameter to the proxy entity, so that the proxy entity can receive the congestion parameter, thereby implementing congestion control.

In a possible implementation, the radio access network device receives indication information from a session management function entity. In other words, the proxy entity may indicate capability exposure of the radio access network device by using the session management function entity.

In a possible implementation, the proxy entity performs the congestion control operation based on measurement information and the congestion parameter, where the measurement information includes a bottleneck bandwidth of a transmission path between the proxy entity and a terminal device and/or a round-trip time of the transmission path. According to the method, the proxy entity may further refer to the bottleneck bandwidth of the transmission path between the proxy entity and the terminal device and/or the round-trip time of the transmission path, so as to determine a congestion status of the wireless network more accurately.

In a possible implementation, the proxy entity reduces a sending rate of a data transmit end when it is not detected in a measurement periodicity that the round-trip time RTT of the transmission path reaches a minimum delay record, the buffer status information indicates that a queue buffer ratio of the radio access network is greater than or equal to a threshold, and the congestion cause value indicates that a congestion cause is wireless retransmission. According to the method, when an original minimum RTT value or a smaller RTT value is not touched in the measurement periodicity, and a queue buffer of the radio access network is large, with reference to the congestion cause value of the radio access network (for example, the queue buffer is large because a wireless channel is unstable currently, but the wireless channel may be restored in a relatively short time, thereby reducing the queue buffer), the proxy entity does not need to radically cut a congestion window, but slightly reduces a rate of sending data to the terminal device, to optimize congestion control on the wireless network.

In a possible implementation, the proxy entity sets a transmit gain coefficient of a data transmit end to a first preset value, and sets a size of a congestion window to a second preset value when it is not detected in a measurement periodicity that the round-trip time of the transmission path reaches a minimum delay record, and the buffer status information indicates that a queue buffer ratio of the radio access network is less than or equal to a threshold. According to the method, when an original minimum RTT value or a smaller RTT value is not touched in the measurement periodicity, and a queue buffer of the radio access network is small (which indicates that a wireless channel is stable and the queue buffer is small currently, and therefore a main congestion cause is that a queue of a transmission path between the radio access network and the proxy entity is congested), the proxy entity directly cuts the congestion window, and reduces a rate of sending data to the terminal device.

In a possible implementation, the proxy entity sets a transmit gain coefficient of a data transmit end to a first preset value, and sets a size of a congestion window to a second preset value when the buffer status information indicates that a queue buffer ratio of the radio access network is greater than or equal to a threshold, and the congestion cause value indicates that a congestion cause is multi-user contention. According to the method, the buffer status information and the congestion cause value indicate that radio side resources are insufficient due to multi-flow contention, and a flow scheduling periodicity is long. In this case, the proxy entity directly cuts the congestion window, and reduces a rate of sending data to the terminal device.

In a possible implementation, the buffer status information of the radio access network includes buffer status information of a media access control layer and/or buffer status information of a radio link control layer, and the congestion cause value includes multi-user contention or wireless retransmission.

In a possible implementation, the congestion parameter is carried in the general packet radio service tunneling protocol user plane header, or the congestion parameter is carried in the transport layer protocol header.

In a possible implementation, the indication information includes a data flow identifier, and the data flow identifier identifies a first data flow. In other words, the indication information indicates the radio access network device to obtain a congestion parameter in the first data flow.

According to a second aspect, an embodiment of this application provides a communication method. The communication method is implemented by a radio access network device, or may be performed by a component (for example, a processor, a chip, or a chip system) of the radio access network device, or may be implemented by a logical module or software that can implement all or some functions of the radio access network device. The radio access network device obtains a congestion parameter of a radio access network based on indication information, and sends the congestion parameter to a proxy entity, where the indication information indicates the radio access network device to obtain the congestion parameter of the radio access network, and the congestion parameter includes buffer status information and/or a congestion cause value of the radio access network. According to the method, the congestion parameter of the radio access network may be obtained through capability exposure of the radio access network device, and the congestion parameter is sent to the proxy entity. This helps optimize congestion control on a wireless network.

In a possible implementation, the radio access network device sends the congestion parameter to the proxy entity in a channel associated mode, where the channel associated mode is adding the congestion parameter to a first data flow from a terminal device. According to the method, the radio access network device may directly add the congestion parameter to an uplink data flow, and transmit the congestion parameter to the proxy entity by using the uplink data flow. This helps simplify a processing procedure.

In a possible implementation, the channel associated mode is adding the congestion parameter to a general packet radio service tunneling protocol user plane G-TPU header or a transport layer protocol header of a first data packet in the first data flow. According to the method, when the congestion parameter is carried in the G-TPU header, a 3GPP protocol header may be reused; or when the congestion parameter is carried in the transport layer protocol header, an existing uplink data packet may be reused.

In a possible implementation, the radio access network device generates a second data packet (the second data packet includes the congestion parameter), and sends the second data packet to the proxy entity. According to the method, the radio access network device may generate the second data packet, where the second data packet does not include service data of an uplink data flow, and therefore the radio access network device does not need to wait for the uplink data flow. This helps send congestion information to the proxy entity more quickly.

In a possible implementation, the radio access network device sends the congestion parameter to a terminal device, and then receives a third data packet from the terminal device, where the third data packet includes the congestion parameter; and the radio access network device sends the third data packet to the proxy entity. According to the method, the radio access network device may send the congestion parameter to the terminal device, and the terminal device generates or reconstructs the third data packet, so as to send congestion information to the proxy entity.

In a possible implementation, the radio access network device sends the congestion parameter to the proxy entity by using a user plane function network element. In other words, the proxy entity and the user plane function network element may be two separately deployed entities. The user plane function network element may forward the congestion parameter to the proxy entity, so that the proxy entity can receive the congestion parameter, thereby implementing congestion control.

In a possible implementation, the radio access network device receives indication information from a session management function entity. In other words, the proxy entity may indicate capability exposure of the radio access network device by using the session management function entity.

In a possible implementation, the buffer status information of the radio access network includes buffer status information of a media access control layer and/or buffer status information of a radio link control layer, and the congestion cause value includes multi-user contention or wireless retransmission.

In a possible implementation, the congestion parameter is carried in the general packet radio service tunneling protocol user plane header, or the congestion parameter is carried in the transport layer protocol header.

In a possible implementation, the indication information includes a data flow identifier, and the data flow identifier identifies a first data flow. In other words, the indication information indicates the radio access network device to obtain a congestion parameter in the first data flow.

In a possible implementation, the radio access network device receives second indication information, where the second indication information indicates the radio access network device to stop obtaining the congestion parameter of the radio access network. According to the method, when the radio access network device does not need to obtain the congestion parameter, the radio access network device may be directly indicated to stop obtaining the congestion parameter, thereby improving network flexibility.

According to a third aspect, an embodiment of this application provides a communication method. The communication method is implemented by a proxy entity, or may be performed by a component (for example, a processor, a chip, or a chip system) of the proxy entity, or may be implemented by a logical module or software that can implement all or some functions of the proxy entity. The proxy entity receives a congestion parameter of a radio access network, and performs a congestion control operation based on the congestion parameter, where the congestion parameter includes buffer status information and/or a congestion cause value of the radio access network. According to the method, the proxy entity may identify the congestion parameter of the radio access network, and perform congestion control based on the congestion parameter, so that congestion control on a wireless network can be optimized.

In a possible implementation, the proxy entity performs the congestion control operation based on measurement information and the congestion parameter, where the measurement information includes a bottleneck bandwidth of a transmission path between the proxy entity and a terminal device and/or a round-trip time of the transmission path. According to the method, the proxy entity may further refer to the bottleneck bandwidth of the transmission path between the proxy entity and the terminal device and/or the round-trip time of the transmission path, so as to determine a congestion status of the wireless network more accurately.

In a possible implementation, the proxy entity reduces a sending rate of a data transmit end when it is not detected in a measurement periodicity that the round-trip time RTT of the transmission path reaches a minimum delay record, the buffer status information indicates that a queue buffer ratio of the radio access network is greater than or equal to a threshold, and the congestion cause value indicates that a congestion cause is wireless retransmission. According to the method, when an original minimum RTT value or a smaller RTT value is not touched in the measurement periodicity, and a queue buffer of the radio access network is large, with reference to the congestion cause value of the radio access network (for example, the queue buffer is large because a wireless channel is unstable currently, but the wireless channel may be restored in a relatively short time, thereby reducing the queue buffer), the proxy entity does not need to radically cut a congestion window, but slightly reduces a rate of sending data to the terminal device, to optimize congestion control on the wireless network.

In a possible implementation, the proxy entity sets a transmit gain coefficient of a data transmit end to a first preset value, and sets a size of a congestion window to a second preset value when it is not detected in a measurement periodicity that the round-trip time of the transmission path reaches a minimum delay record, and the buffer status information indicates that a queue buffer ratio of the radio access network is less than or equal to a threshold. According to the method, when an original minimum RTT value or a smaller RTT value is not touched in the measurement periodicity, and a queue buffer of the radio access network is small (which indicates that a wireless channel is stable and the queue buffer is small currently, and therefore a main congestion cause is that a queue of a transmission path between the radio access network and the proxy entity is congested), the proxy entity directly cuts the congestion window, and reduces a rate of sending data to the terminal device.

In a possible implementation, the proxy entity sets a transmit gain coefficient of a data transmit end to a first preset value, and sets a size of a congestion window to a second preset value when the buffer status information indicates that a queue buffer ratio of the radio access network is greater than or equal to a threshold, and the congestion cause value indicates that a congestion cause is multi-user contention. According to the method, the buffer status information and the congestion cause value indicate that radio side resources are insufficient due to multi-flow contention, and a flow scheduling periodicity is long. In this case, the proxy entity directly cuts the congestion window, and reduces a rate of sending data to the terminal device.

In a possible implementation, the buffer status information of the radio access network includes buffer status information of a media access control layer and/or buffer status information of a radio link control layer, and the congestion cause value includes multi-user contention or wireless retransmission.

In a possible implementation, the congestion parameter is carried in a general packet radio service tunneling protocol user plane header, or the congestion parameter is carried in a transport layer protocol header.

According to a fourth aspect, an embodiment of this application provides a communication method. The communication method is implemented by a user plane function network element, or may be performed by a component (for example, a processor, a chip, or a chip system) of the user plane function network element, or may be implemented by a logical module or software that can implement all or some functions of the user plane function network element. The user plane function network element receives a data packet, where the data packet includes a congestion parameter of a radio access network; and the user plane function network element adjusts an encapsulation location of the congestion parameter in the data packet, and sends an adjusted data packet to a proxy entity. According to the method, it is assumed that the user plane function network element and the proxy entity are separately disposed two function entities. The user plane function network element receives the congestion parameter before the proxy entity, and adjusts the encapsulation location of the congestion parameter in the data packet. This helps the proxy entity identify the congestion parameter.

In a possible implementation, when the encapsulation location of the congestion parameter is a general packet radio service tunneling protocol user plane header, the encapsulation location of the congestion parameter is adjusted to a transport layer protocol header or a second tunneling protocol header, where a second tunneling protocol is a tunneling protocol between the user plane function network element and the proxy entity. According to the method, the congestion parameter is encapsulated in the transport layer protocol header or the second tunneling protocol header, so as to help the proxy entity identify the congestion parameter.

In a possible implementation, when the encapsulation location of the congestion parameter is a transport layer protocol header, the encapsulation location of the congestion parameter is adjusted to a second tunneling protocol header.

According to a fifth aspect, an embodiment of this application provides a communication method. The communication method is implemented by a terminal device, or may be performed by a component (for example, a processor, a chip, or a chip system) of the terminal device, or may be implemented by a logical module or software that can implement all or some functions of the terminal device. The terminal device receives a congestion parameter of a radio access network, and generates a third data packet, where the third data packet includes the congestion parameter. The terminal device sends the congestion parameter to a proxy entity. According to the method, the terminal device may generate or reconstruct the third data packet based on the congestion parameter, so that the terminal device can send congestion information to the proxy entity without adjusting an encapsulation location of the congestion parameter.

In a possible implementation, the terminal device adds the congestion parameter to a general packet radio service tunneling protocol user plane header or a transport layer protocol header of a first data packet of a first data flow, and reconstructs the first data packet into the third data packet; or the terminal device generates the third data packet based on the congestion parameter, where the third data packet does not include service data in the first data flow.

In a possible implementation, the congestion parameter is carried in the general packet radio service tunneling protocol user plane header, or the congestion parameter is carried in the transport layer protocol header.

According to a sixth aspect, an embodiment of this application provides a communication apparatus. The communication apparatus includes a processing unit and a transceiver unit. The processing unit is configured to obtain a congestion parameter of a radio access network based on indication information. The indication information indicates a radio access network device to obtain the congestion parameter of the radio access network. The congestion parameter includes buffer status information and/or a congestion cause value of the radio access network. The transceiver unit is configured to send the congestion parameter to a proxy entity.

For specific implementations of the congestion parameter, the indication information, how to send the congestion parameter to the proxy entity, and the like, refer to corresponding descriptions in the second aspect. Details are not described herein again.

According to a seventh aspect, an embodiment of this application provides a communication apparatus. The communication apparatus includes a processing unit and a transceiver unit. The transceiver unit is configured to receive a congestion parameter of a radio access network. The congestion parameter includes buffer status information and/or a congestion cause value of the radio access network. The processing unit is configured to perform a congestion control operation based on the congestion parameter.

For specific implementations of the congestion parameter, the indication information, how to receive the congestion parameter, how to perform the congestion control operation based on the congestion parameter, and the like, refer to corresponding descriptions in the third aspect. Details are not described herein again.

According to an eighth aspect, an embodiment of this application provides a communication apparatus. The communication apparatus includes a processing unit and a transceiver unit. The transceiver unit is configured to receive a data packet, where the data packet includes a congestion parameter of a radio access network. The processing unit is configured to adjust an encapsulation location of the congestion parameter in the data packet. The transceiver unit is further configured to send an adjusted data packet to a proxy entity.

For specific implementations of the congestion parameter, how to adjust the encapsulation location of the congestion parameter, and the like, refer to corresponding descriptions in the fourth aspect. Details are not described herein again.

According to a ninth aspect, an embodiment of this application provides a communication apparatus. The communication apparatus includes a processing unit and a transceiver unit. The transceiver unit is configured to receive a congestion parameter of a radio access network. The processing unit is configured to generate a third data packet, where the third data packet includes the congestion parameter. The transceiver unit is further configured to send the third data packet to a proxy entity.

For specific implementations of the congestion parameter, how to generate the third data packet, and the like, refer to corresponding descriptions in the fifth aspect. Details are not described herein again.

According to a tenth aspect, an embodiment of this application provides a radio access network device. The radio access network device includes one or more processors and a memory, the memory is coupled to the one or more processors, the memory stores a computer program, and when the one or more processors execute the computer program, the device performs the following operations:
obtaining a congestion parameter of a radio access network based on indication information, where the indication information indicates the radio access network device to obtain the congestion parameter of the radio access network, and the congestion parameter includes buffer status information and/or a congestion cause value of the radio access network; and
sending the congestion parameter to a proxy entity.

For specific implementations of the congestion parameter, the indication information, how to send the congestion parameter to the proxy entity, and the like, refer to corresponding descriptions in the second aspect. Details are not described herein again.

According to an eleventh aspect, an embodiment of this application provides a proxy entity. The proxy entity includes one or more processors and a memory, the memory is coupled to the one or more processors, the memory stores a computer program, and when the one or more processors execute the computer program, the device performs the following operations:
receiving a congestion parameter of a radio access network, where the congestion parameter includes buffer status information and/or a congestion cause value of the radio access network; and
performing a congestion control operation based on the congestion parameter.

For specific implementations of the congestion parameter, the indication information, how to receive the congestion parameter, how to perform the congestion control operation based on the congestion parameter, and the like, refer to corresponding descriptions in the third aspect. Details are not described herein again.

According to a twelfth aspect, an embodiment of this application provides a user plane function network element. The user plane function network element includes one or more processors and a memory, the memory is coupled to the one or more processors, the memory stores a computer program, and when the one or more processors execute the computer program, the device performs the following operations:
receiving, by an entity, a data packet, where the data packet includes a congestion parameter of a radio access network;
adjusting an encapsulation location of the congestion parameter in the data packet; and
sending an adjusted data packet to a proxy entity.

For specific implementations of the congestion parameter, how to adjust the encapsulation location of the congestion parameter, and the like, refer to corresponding descriptions in the fourth aspect. Details are not described herein again.

According to a thirteenth aspect, an embodiment of this application provides a terminal device. The terminal device includes one or more processors and a memory, the memory is coupled to the one or more processors, the memory stores a computer program, and when the one or more processors execute the computer program, the device performs the following operations:
receiving a congestion parameter of a radio access network;
generating a third data packet, where the third data packet includes the congestion parameter; and
sending the third data packet to a proxy entity.

For specific implementations of the congestion parameter, how to generate the third data packet, and the like, refer to corresponding descriptions in the fifth aspect. Details are not described herein again.

According to a fourteenth aspect, an embodiment of this application provides a communication system. The communication system includes one or more of the communication apparatuses provided in the fifth aspect to the ninth aspect, or includes one or more of the radio access network device provided in the tenth aspect, the proxy entity provided in the eleventh aspect, the user plane function network element provided in the twelfth aspect, and the terminal device provided in the thirteenth aspect. For specific descriptions of functions implemented by the communication entity, refer to the descriptions in the first aspect. Details are not described herein again.

According to a fifteenth aspect, an embodiment of this application provides a computer-readable storage medium. The computer-readable storage medium stores a computer program, and the computer program is executed by a processor to implement the method according to any one of the first aspect to the fifth aspect or the possible implementations of the first aspect to the fifth aspect.

According to a sixteenth aspect, an embodiment of this application provides a chip system. The chip system includes a processor and a memory, and is configured to implement the method according to any one of the first aspect to the fifth aspect or the possible implementations of the first aspect to the fifth aspect. The chip system may include a chip, or may include a chip and another discrete component.

According to a seventeenth aspect, an embodiment of this application provides a computer program product, including instructions. When the instructions are run on a computer, the computer is enabled to perform the method according to any one of the first aspect to the fifth aspect or the possible implementations of the first aspect to the fifth aspect.

### BRIEF DESCRIPTION OF DRAWINGS

FIG. 1 is a diagram of a network architecture according to an embodiment of this application;
FIG. 2 is a state transition diagram of a BBR algorithm;
FIG. 3 is a schematic flowchart of a communication method according to an embodiment of this application;
FIG. 4A to FIG. 4D are a schematic flowchart of a communication method applied to an actual network scenario according to an embodiment of this application;
FIG. 5A to FIG. 5D are another schematic flowchart of a communication method applied to an actual network scenario according to an embodiment of this application;
FIG. 6 is a diagram of a device according to an embodiment of this application; and
FIG. 7 is a diagram of an apparatus according to an embodiment of this application.

### DESCRIPTION OF EMBODIMENTS

A wireless communication system includes a communication device, and the communication device may perform wireless communication by using an air interface resource. The communication device may include a radio access network device and a terminal device, and the radio access network device may also be referred to as a wireless network side device. The air interface resource may include at least one of a time domain resource, a frequency domain resource, a code resource, and a spatial resource. In embodiments of this application, "at least one" may alternatively be described as one or more, and "a plurality of" may be two, three, four, or more. This is not limited in this application.

In embodiments of this application, "/" may represent an "or" relationship between associated objects. For example, A/B may represent A or B. "and/or" may be used to indicate that there are three relationships between associated objects. For example, A and/or B may represent the following three cases: Only A exists, both A and B exist, and only B exists, where A and B may be singular or plural. For ease of describing the technical solutions in embodiments of this application, in embodiments of this application, words such as "first" and "second" may be used to distinguish technical features with a same or similar function. The words such as "first" and "second" do not limit a quantity and an execution sequence, and the words such as "first" and "second" do not limit a definite difference. In embodiments of this application, the word such as "example" or "for example" is used to represent an example, evidence, or a description. Any embodiment or design solution described as "example" or "for example" should not be explained as being more preferred or having more advantages than another embodiment or design solution. A word such as "example" or "for example" is used to present a related concept in a specific manner for ease of understanding.

The following describes the technical solutions in embodiments of this application with reference to the accompanying drawings in embodiments of this application.

A communication network is in a shared environment, and therefore the network may be congested due to multi-party communication. For example, when the network is congested, if a large quantity of data packets are still sent, a data packet delay may be increased, or a data packet loss may be caused. According to a transport layer protocol (for example, a transmission control protocol (transmission control protocol, TCP)), data is retransmitted (retransmission for short). However, retransmission causes a heavier load of the network, which further causes a larger delay and more packet losses. This situation enters a vicious cycle and is continuously amplified. Therefore, to prevent data sent by a sender from filling the entire network, a congestion control mechanism is introduced. In the congestion control mechanism, a congestion window is defined to adjust an amount of data to be sent by the sender. The congestion window is a state variable that the sender needs to maintain. The congestion window may dynamically change according to a congestion degree of the network. When the congestion degree of the network is high, a size of the congestion window is reduced. When the congestion degree of the network is low, the size of the congestion window is kept within a threshold range (to send more data packets).

Further, a bottleneck bandwidth and round-trip time (bottleneck bandwidth and round-trip time, BBR) algorithm can optimize the congestion control mechanism. A principle of the BBR algorithm is to maximize a bandwidth of a network link that allows a specific packet loss rate and reduce buffer usage of a data packet on the network link, so as to reduce the delay while guaranteeing the bandwidth. For example, when the BBR algorithm is executed, round-trip times (round-trip times, RTTs) and bandwidths (bandwidths, BWs) are monitored in real time, and a minimum RTT and a maximum BW are detected in real time. If there is no minimum RTT in detected RTTs in a measurement periodicity (for example, consecutive 10 seconds), congestion occurs (for example, congestion caused by multi-flow contention), and the congestion window is reduced to a minimum value. However, different from a wired network, a mobile communication network may be congested due to congestion on a wireless side (for example, congestion caused by retransmission on the wireless side) in addition to the multi-flow contention. Therefore, the congestion on the wireless side is worthy of attention.

To resolve the foregoing problem, embodiments of this application provide a communication method. According to the method, a congestion parameter of a radio access network (including buffer status information and/or a congestion cause value of the radio access network) may be obtained through capability exposure of a radio access network device, so as to determine whether congestion occurs in the radio access network. In addition, the congestion parameter of the radio access network may be identified by using a proxy entity, so that congestion control on a wireless network can be optimized.

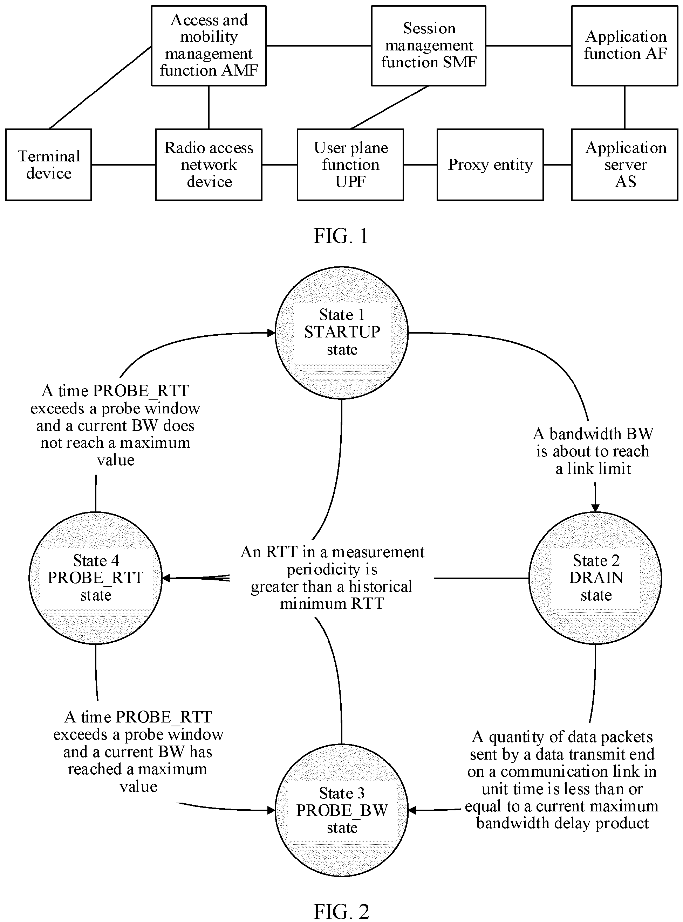

The communication method provided in embodiments of this application may be applied to a network architecture shown in FIG. 1. The network architecture includes but is not limited to the following devices or network elements: a terminal device, a radio access network (radio access network, RAN) device, an access and mobility management function (access and mobility management function, AMF) network element, a session management function (session management function, SMF) network element, an application function (application function, AF) network element, an application server (application server, AS), a user plane function (user plane function, UPF) network element, a proxy entity, and the like.

Specifically, the terminal device may be user equipment (user equipment, UE), a terminal, a mobile phone, an internet of things terminal device (for example, a vehicle-mounted device or a wearable device), a terminal device in a 5G network, a terminal device in a future evolved PLMN network, a terminal device in a next generation network (for example, 6G), or the like. The radio access network device may be a device that can communicate with the terminal device. The radio access network device may be a base station (base station, BS), a relay station, or an access point (access point, AP). The base station may be an evolved NodeB (eNB or eNodeB for short) in a long term evolution (long term evolution, LTE) system, or may be a gNodeB in a new radio (new radio, NR) network, or may be a radio controller in a cloud radio access network (cloud radio access network, CRAN) scenario, or may be an AP in a wireless fidelity (wireless fidelity, Wi-Fi) network, a BS in a worldwide interoperability for microwave access (worldwide interoperability for microwave access, WiMAX) network, or the like. The AMF is mainly responsible for mobility management in a mobile network, such as user location update, user network registration, and user handover. The SMF is mainly responsible for session management (such as session establishment, modification, and release), internet protocol (Internet protocol, IP) address allocation and management, UPF selection and control, and the like in the mobile network. The AF is mainly responsible for providing a service for a core network, for example, affecting service routing and performing policy control. The AS is mainly responsible for providing an application service. The UPF is mainly responsible for forwarding and processing a user packet, providing a session anchor, executing a quality of service (quality of service, QoS) policy, and the like. The proxy entity is configured to perform congestion control.

For ease of understanding, the following describes in detail definitions of related terms in embodiments of this application.
1. BBR congestion control: An objective of the BBR congestion control (also referred to as a BBR algorithm) is to maximize a bandwidth of a network link that allows a specific packet loss rate and reduce buffer usage of a data packet on the network link, so as to reduce the delay while guaranteeing the bandwidth. In the BBR algorithm, it is determined, by monitoring RTTs in a period of time, whether a historical minimum RTT (that is, a minimum RTT detected at any previous moment) or an RTT less than the historical minimum RTT is touched (touch), to determine whether congestion occurs on the network link; and if the historical minimum RTT or the RTT less than the historical minimum RTT is not touched, it is determined that congestion occurs on the network link; or if the historical minimum RTT or the RTT less than the historical minimum RTT is touched, it is determined that congestion does not occur on the network link.

The BBR algorithm includes the following important parameters:
(1) Round-trip time RTT: indicates a total delay from sending data by a data transmit end to receiving an acknowledgment (acknowledge, ACK) by the data transmit end from a data receive end (the data receive end immediately provides feedback after receiving the data). It may be understood that each data packet corresponds to one RRT.
(2) Bandwidth BW: indicates a bandwidth of a communication link between an application server and a terminal device. The bandwidth is a total amount of data that can be successfully transmitted on the communication link per second, and is in a unit of bit per second (bit/s). Assuming that a total amount of answered data (that is, a total amount of acknowledged data) is represented as delivered, and a time used for the total amount of answered data is represented as interval_µs, BW=delivered/interval_µs. It may be understood that the bandwidth represents a current actual processing capability of a network. For example, during calculation of delivered, a data transmit end first determines that ACKs fed back by a data receive end are received within interval_µs, and then calculates a total amount of data corresponding to all the ACKs that are fed back (that is, a total quantity of bits of data successfully sent by the data transmit end within interval_µs). It may be understood that the ACKs that are fed back include a normal ACK, a retransmitted ACK, or a selective acknowledgment (selective acknowledgment, SACK), that is, all the data answered by the data receive end needs to be counted.
(3) Transmit gain coefficient (gain coefficient, G): indicates a gain coefficient obtained when a data transmit end sends a data packet. For example, G=2 indicates that data is sent at twice a current rate for sending the data packet, and G=1 indicates that data is sent at the current rate for sending the data packet, that is, the rate remains unchanged.
(4) Congestion window: indicates a maximum quantity of data packets that can be sent by a data transmit end at a time in a congestion control case. A size of the congestion window depends on a network congestion degree and changes dynamically. A principle in which the data transmit end controls the congestion window is as follows: As long as no network congestion occurs, the congestion window is increased, so that more data packets are sent. However, as long as network congestion occurs, the congestion window is reduced, so that a quantity of data packets transmitted in a network is reduced.

Specifically, four states are defined for the BBR according to a network congestion behavior: a state 1 (STARTUP state), a state 2 (DRAIN state), a state 3 (PROBE_BW state), and a state 4 (PROBE_RTT state), as shown in FIG. 2.

The state 1 (STARTUP state) indicates a state in which the data transmit end accelerates bandwidth preemption, that is, the data transmit end sends data at an increasing rate, for example, G=2 to 3. In the STARTUP state, the data transmit end keeps updating a minimum RTT and a maximum BW.

The state 2 (DRAIN state): The data transmit end monitors BWs in the STARTUP state in real time, and compares the BWs with a historical maximum BW. If it is detected that there have been more than three times when a BW has increased by no more than 25% from the historical maximum BW, it is considered that the BW is about to reach a link limit. In this case, the data transmit end enters the DRAIN state from the STARTUP state (that is, buffered data in a link is about to be overloaded, and therefore a related parameter needs to be adjusted to reduce the buffered data in the link). For example, the transmit gain coefficient G is adjusted to G=1000/2885, and a congestion window gain coefficient G' is set to G'=(1000/2005)+1. In the DRAIN state, the data transmit end keeps updating a minimum RTT and a maximum BW.

The state 3 (PROBE_BW state) indicates that the communication link is about to enter a stable state. In this case, the data transmit end enters the PROBE_BW state. Specifically, when the data transmit end is in the DRAIN state, if a quantity (In-packet) of data packets sent by the data transmit end in the communication link in unit time is less than or equal to a current maximum bandwidth delay product (bandwidth delay product, BDP, BDP=BW*RTT), the data transmit end enters the PROBE_BW state. The PROBE_BW state is a stable state. For example, in the PROBE_BW state, the transmit gain coefficient may be adjusted to G=Random(5/4, 3/4, 1, 1, 1, 1, 1, 1), and the transmit gain coefficient in the set is circulated according to an arrangement order.

The state 4 (PROBE_RTT state) indicates a congestion processing state. For example, in any state of the BBR, if a detected RTT does not touch a historical minimum RTT in a measurement periodicity (for example, consecutive 10 seconds), it indicates that congestion occurs in a network link. The transmit gain coefficient may be adjusted to G=1, and the congestion window is cut (cut) to a minimum value (four maximum segment sizes (maximum segment sizes, MSSs)).

In conclusion, in the four states of the BBW algorithm, RTTs and BWs are monitored in real time, and a minimum RTT and a maximum BW at a current moment are detected in real time. However, it may be learned by analyzing the foregoing states that the BW is only used as a condition for switching between the first three states, for example, switching from the state 1 to the state 2, from the state 2 to the state 3, and from the state 1 to the state 3 according to a status of the BW, as shown in FIG. 2. The first three states may be switched between each other, for example, switch to another state as a network congestion status changes. However, it is only necessary to determine whether a historical minimum RRT is touched in a measurement periodicity (for example, determine whether a minimum RTT detected in 10s is less than or equal to the historical minimum RTT), to determine a specific time at which the data transmit end enters the state 4 (that is, determine whether congestion occurs on the network). After an RTT trigger condition is met, the data transmit end enters the congestion processing state (that is, the PROBE_RTT state), for example, directly enters the state 4 from the state 1, directly enters the state 4 from the state 2, or directly enters the state 4 from the state 3, and after entering the state 4, performs congestion control, as shown in FIG. 2.

2. Proxy entity: The proxy entity is configured to: identify a congestion parameter of a radio access network, and perform congestion control on a network based on the congestion parameter. In an implementation, as shown in FIG. 1, the proxy entity and the UPF are two separate network elements. In an implementation in which the proxy entity and the UPF are separately deployed, a function of the UPF in embodiments of this application may be enhanced. For example, the UPF may identify a data packet including the congestion parameter, and adjust an encapsulation location of the congestion parameter in the data packet. In another implementation, the proxy entity and the UPF may be integrated, that is, a function of the proxy entity is included in the UPF, and the function of the proxy entity may be implemented by using the UPF. Specifically, either of the foregoing two implementations is used, which is not limited in this embodiment. Specifically, the proxy entity provided in embodiments of this application may be a transport layer proxy, and the proxy entity may perform interaction at a transport layer, which is more flexible. The proxy entity has some functions of a server, for example, monitoring a specific TCP or user datagram protocol (user datagram protocol, UDP) port, receiving a request from a client, and sending a corresponding response to the client.

The following describes in detail the communication method provided in embodiments of this application.

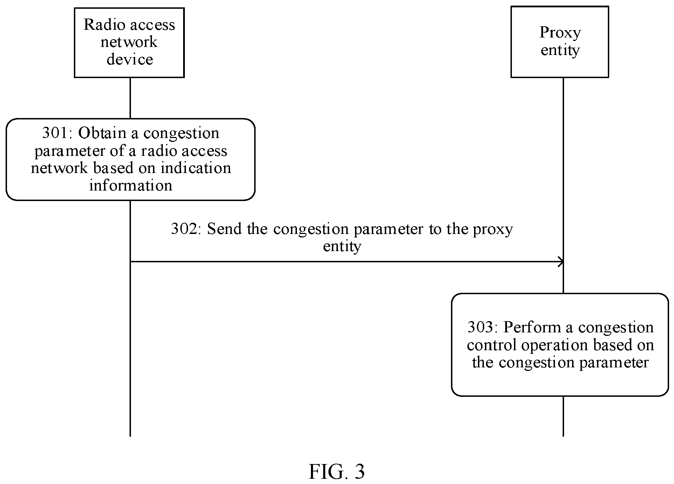

FIG. 3 is a schematic flowchart of a communication method according to an embodiment of this application. The communication method is implemented through interaction between a radio access network device and a proxy entity, and includes the following steps.

301: The radio access network device obtains a congestion parameter of a radio access network based on indication information.

The indication information indicates the radio access network device to obtain the congestion parameter of the radio access network. Specifically, the indication information may include but is not limited to information such as an information enabling indication and a data flow identifier. The information enabling indication indicates whether the radio access network device enables a function to obtain the congestion parameter of the radio access network. For example, the information enabling indication may provide an indication by using two different values (for example, "0" or " 1"). It is assumed that "0" indicates that the radio access network device does not enable the function (that is, the radio access network device does not need to obtain the congestion parameter of the radio access network), and " 1" indicates that the radio access network device enables the function to obtain the congestion parameter of the radio access network. It may be understood that the foregoing example is merely an example, and the information enabling indication may alternatively indicate, in another manner (for example, by using a binary bit or a Boolean value), whether the radio access network device enables the function to obtain the congestion parameter of the radio access network. This is not specifically limited herein. The data flow identifier identifies a first data flow. The first data flow is a data flow (that is, a data flow including a to-be-obtained congestion parameter) sent by a data transmit end (for example, a terminal device) to a data receive end (for example, an AS). The first data flow may be a service flow (for example, an audio/video flow), or may be a QoS flow. It may be understood that, when the indication information carries the data flow identifier of the first data flow, the indication information indicates the radio access network device to obtain the congestion parameter in the first data flow. Further, an SMF may request an AMF to send the indication information to the radio access network device. For example, the SMF requests, by using an Namf_Communication_N1N2MessageTransfer service, the AMF to send the indication information to the radio access network device, to indicate the radio access network device to obtain the congestion parameter of the radio access network. Alternatively, the proxy entity may send the indication information and then the SMF and the AMF forwards the indication information to the radio access network device. Alternatively, the proxy entity may trigger the SMF to send the indication information and then the AMF forwards the indication information to the radio access network device. A specific implementation is not limited in this embodiment.

The congestion parameter includes buffer status information and/or a congestion cause value of the radio access network. Specifically, the buffer status information of the radio access network indicates a queue buffer status of the radio access network, and may specifically include but is not limited to buffer status information of a media access control (media access control, MAC) layer, buffer status information of a radio link control (radio link control, RLC) layer, and the like. For example, the buffer status information of the radio access network that is obtained by the radio access network device based on the indication information includes the buffer status information of the MAC layer (for example, information such as a queue buffer ratio of the MAC layer) and the buffer status information of the RLC layer (for example, information such as a queue buffer ratio of the RLC layer). The congestion cause value of the radio access network indicates a cause of congestion in the radio access network, and may specifically include but is not limited to multi-user contention, wireless retransmission, and the like. For example, the congestion cause value of the radio access network that is obtained by the radio access network device based on the indication information is multi-user contention, that is, the cause of congestion in the radio access network is multi-user contention (for example, because a quantity of accessed terminal devices is excessively large, resources on a radio access network side are scarce, and network congestion is caused). Further, the congestion parameter is carried in a general packet radio service tunneling protocol user plane (GPRS tunneling protocol user plane, GTP-U) header, or the congestion parameter is carried in a transport layer protocol (for example, TCP) header.

302: The radio access network device sends the congestion parameter to the proxy entity.

A deployment manner of the proxy entity may include the following cases: The proxy entity and a UPF are integrated (that is, the proxy entity and the UPF may be considered as one device), and the proxy entity and the UPF are separately deployed (that is, the proxy entity and the UPF may be considered as two different devices).

When the proxy entity and the UPF are integrated, the radio access network device may directly send the congestion parameter to a device in which the proxy entity and the UPF are integrated. For example, the radio access network device sends, to the device in which the proxy entity and the UPF are integrated, a data packet carrying the congestion parameter. Due to a tunneling mechanism between the radio access network device and the UPF, the data packet that is sent by the radio access network device and that carries the congestion parameter may arrive at the UPF, that is, the proxy entity integrated with the UPF can receive the data packet.

When the proxy entity and the UPF are separately deployed, if a destination IP address of the data packet carrying the congestion parameter is an IP address of the proxy entity, the radio access network device directly sends, to the proxy entity based on the destination IP address, the data packet carrying the congestion parameter. If the destination IP address of the data packet carrying the congestion parameter is not the IP address of the proxy entity (for example, the destination IP address is an IP address of the AS), in an implementation, the radio access network device may send the congestion parameter to the proxy entity by using the UPF. For example, the UPF receives the indication information, or the UPF preconfigures processing logic, so that when receiving the data packet carrying the congestion parameter, the UPF can identify the congestion parameter and perform corresponding processing (for example, directly forward the congestion parameter to the proxy entity). In another implementation, assuming that the proxy entity is deployed at a gateway for accessing the internet, the data packet that carries the congestion parameter and whose destination IP address is the IP address of the AS passes through the gateway and then arrives at the AS. In this case, the data packet carrying the congestion parameter can also arrive at the proxy entity deployed at the gateway (that is, the proxy entity can also receive the congestion parameter). It may be understood that in this application, it is considered that the congestion parameter is sent to the proxy entity provided that the congestion parameter can arrive at the proxy entity.

Specifically, the radio access network device may send the congestion parameter to the proxy entity in the following several manners:
Manner 1: The radio access network device sends the congestion parameter to the proxy entity in a channel associated mode, where the channel associated mode is adding the congestion parameter to the first data flow from the terminal device.

For example, the radio access network device may receive the first data flow from the terminal device, where the first data flow includes a first data packet. The radio access network device may add the congestion parameter to an outer GTP-U header or a transport layer protocol (for example, TCP) header of the first data packet, and then send, to the proxy entity, the first data packet to which the congestion parameter is added. In Manner 1, the radio access network device may directly add the congestion parameter to a to-be-sent uplink data flow, so as to reduce a quantity of packets to be sent by the radio access network device.

Manner 2: The radio access network device generates a second data packet, where the second data packet includes the congestion parameter, and sends the second data packet to the proxy entity.

For example, the radio access network device reconstructs a second data packet, and adds the congestion parameter to a GTP-U header or a transport layer protocol (for example, TCP) header of the second data packet (in this case, a data field of the second data packet is null), or adds the congestion parameter to a data field of the second data packet, and sends the second data packet to the proxy entity. In Manner 2, the radio access network device can send the congestion parameter to the proxy entity without waiting for arrival of an uplink data flow, and may directly send the data packet carrying the congestion parameter to the proxy entity. This is conducive to quick processing of a system.

Manner 3: The radio access network device provides the congestion parameter for the terminal device, and the terminal device provides the congestion parameter for the proxy entity by using a third data packet. This manner may include the following steps:
S11: The radio access network device sends the congestion parameter to the terminal device.
S12: The radio access network device receives the third data packet from the terminal device, where the third data packet includes the congestion parameter.
S13: The radio access network device sends the third data packet to the proxy entity.

For example, the radio access network device sends a downlink data packet to the terminal device, where the downlink data packet includes the congestion parameter. After receiving the downlink data packet, the terminal device obtains the congestion parameter by parsing the downlink data packet. The terminal device adds the received congestion parameter to a corresponding uplink data packet (for example, the third data packet), and sends the third data packet to the radio access network device. The third data packet may be an uplink data packet that the terminal device originally needs to send (that is, the third data packet includes service data), or the third data packet may be a data packet reconstructed by the terminal device (that is, the third data packet does not include service data). This is not limited in this embodiment.

303: The proxy entity performs a congestion control operation based on the congestion parameter.

The proxy entity may identify, based on the congestion parameter provided on a RAN side, network congestion caused by multi-user contention or wireless retransmission in the radio access network, and adaptively apply BBR congestion control to a wireless network by using a transport layer proxy architecture, to implement congestion control. Specifically, the proxy entity may perform the congestion control operation based on measurement information and the congestion parameter. The measurement information includes a bottleneck bandwidth of a transmission path between the proxy entity and the terminal device and/or a round-trip time of the transmission path. It may be understood that the measurement information herein includes important parameters RTT and BW in a BBR algorithm. In this embodiment, the RTT is specifically the RTT of the transmission path between the proxy entity and the terminal device, and the BW is specifically the bottleneck bandwidth of the transmission path between the proxy entity and the terminal device. It should be noted that the transmission path between the proxy entity and the terminal device includes a wired path and a wireless path, the wired path includes a transmission path from the proxy entity to the radio access network device, and the wireless path includes a transmission path from the radio access network device to the terminal device. Specifically, the proxy entity may specifically perform the congestion control operation in the following several manners with reference to the BBR measurement information and the congestion parameter of the radio access network:
Manner 1: The proxy entity reduces a sending rate of a data transmit end when it is not detected in a measurement periodicity that the round-trip time RTT of the transmission path reaches a minimum delay record, the buffer status information indicates that a queue buffer ratio of the radio access network is greater than or equal to a threshold, and the congestion cause value indicates that a congestion cause is wireless retransmission.

For example, assuming that the measurement periodicity is 10s, if a minimum delay record (that is, a historical minimum RTT) or an RTT less than the historical minimum RTT is not touched in 10s, it indicates that congestion occurs on the transmission path between the proxy entity and the terminal device. Further, if the buffer status information indicates that the queue buffer ratio of the radio access network is greater than or equal to the threshold (for example, the queue buffer ratio of the radio access network is 80%, which is greater than the threshold 60%, indicating that a queue buffer of the radio access network is large currently), and the congestion cause value indicates that the congestion cause is wireless retransmission (that is, the large queue buffer of the radio access network is caused by wireless retransmission), the proxy entity may determine that congestion on the transmission path between the proxy entity and the terminal device is caused by congestion on a wireless path. In this case, congestion caused by wireless retransmission of the wireless network may be restored quickly, the proxy entity may slightly reduce a rate of sending data to the terminal device, instead of directly entering a PROBE _RTT state (that is, radically reducing the rate of sending data), thereby optimizing congestion control on the radio access network. For example, that the proxy entity slightly reduces the rate of sending data to the terminal device may be: The proxy entity may directly reduce a transmit gain coefficient G to a small extent (for example, reduce the transmit gain coefficient to 80% of an original value), so as to reduce the queue buffer of the radio access network. Alternatively, the proxy entity may reduce a congestion window gain coefficient G' (for example, reduce the congestion window gain coefficient G' to 90% of an original value), so as to reduce the rate of sending data to the terminal device. A specific implementation is not limited in this embodiment.

Manner 2: The proxy entity sets a transmit gain coefficient of a data transmit end to a first preset value, and sets a size of a congestion window to a second preset value when it is not detected in a measurement periodicity that the round-trip time of the transmission path reaches a minimum delay record, and the buffer status information indicates that a queue buffer ratio of the radio access network is less than or equal to a threshold.

For example, assuming that the measurement periodicity is 10s, if a minimum delay record (that is, a historical minimum RTT) or an RTT less than the historical minimum RTT is not touched in 10s, it indicates that congestion occurs on the transmission path between the proxy entity and the terminal device. Further, if the buffer status information indicates that the queue buffer ratio of the radio access network is less than or equal to the threshold (for example, the queue buffer ratio of the radio access network is 50%, which is less than the threshold 60%, indicating that a queue buffer of the radio access network is small currently), the proxy entity may determine that congestion on the transmission path between the proxy entity and the terminal device is caused by congestion on a wired path. It should be noted that, in Manner 2, because a main cause of network congestion is congestion on the wired path, the congestion cause value in the congestion parameter may be multi-user contention or wireless retransmission, or the congestion cause value may be null (the RAN side may not identify that congestion occurs). This is not limited herein. In this case, the proxy entity may directly cut the congestion window based on the BBR algorithm. Specifically, the proxy entity may set the transmit gain coefficient of the data transmit end to the first preset value, and set the size of the congestion window to the second preset value. For example, the proxy entity directly switches to the PROBE _RTT state, adjusts the transmit gain coefficient to G=1 (that is, the first preset value), and cuts the congestion window to a minimum value (for example, four maximum segment sizes, that is, the second preset value). It should be noted that the first preset value and the second preset value herein are merely examples, and the two preset values may alternatively be set to other smaller values. This is not specifically limited herein.

Manner 3: The proxy entity sets a transmit gain coefficient of a data transmit end to a first preset value, and sets a size of a congestion window to a second preset value when the buffer status information indicates that a queue buffer ratio of the radio access network is greater than or equal to a threshold, and the congestion cause value indicates that a congestion cause is multi-user contention.

For example, if the buffer status information indicates that the queue buffer ratio of the radio access network is greater than or equal to the threshold (for example, the queue buffer ratio of the radio access network is 80%, which is greater than the threshold 60%, indicating that a queue buffer of the radio access network is large currently), and the congestion cause value indicates that the congestion cause is multi-user contention (that is, the large queue buffer of the radio access network is caused by multi-user contention), and in this case, a scheduling periodicity of a data flow in the network is large currently and the multi-user contention leads to resource scarcity of the radio access network, the proxy entity may directly cut the congestion window. Specifically, the proxy entity may set the transmit gain coefficient of the data transmit end to the first preset value, and set the size of the congestion window to the second preset value. For a specific implementation, refer to the corresponding example descriptions in Manner 2. Details are not described herein again.

It may be understood that the congestion control operation described in Manner 1 to Manner 3 is mainly for a transport layer connection between the terminal device and the proxy entity. This embodiment sets no special limitation on a congestion control operation on a transport layer connection between the proxy entity and the AS. Optionally, a receive window of the proxy entity in the transport layer connection between the proxy entity and the AS may be set based on the congestion control operation and a queue buffer status in the proxy entity.

An embodiment of this application provides a communication method. In the communication method, through capability exposure of a radio access network device, the radio access network device may obtain a congestion parameter of a radio access network based on indication information, and send the congestion parameter to a proxy entity. The proxy entity determines, based on the congestion parameter, whether congestion occurs in the radio access network, and the proxy entity may identify the congestion parameter of the radio access network, so that congestion control on a wireless network can be optimized.

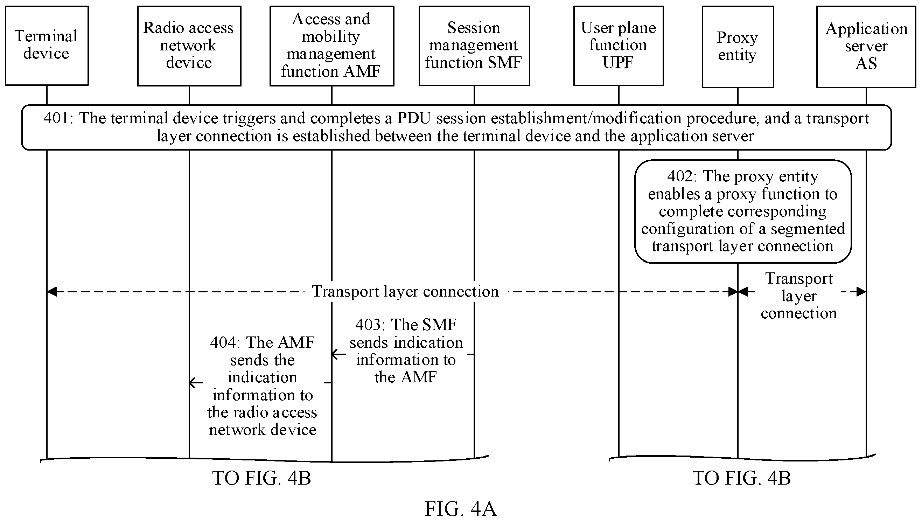

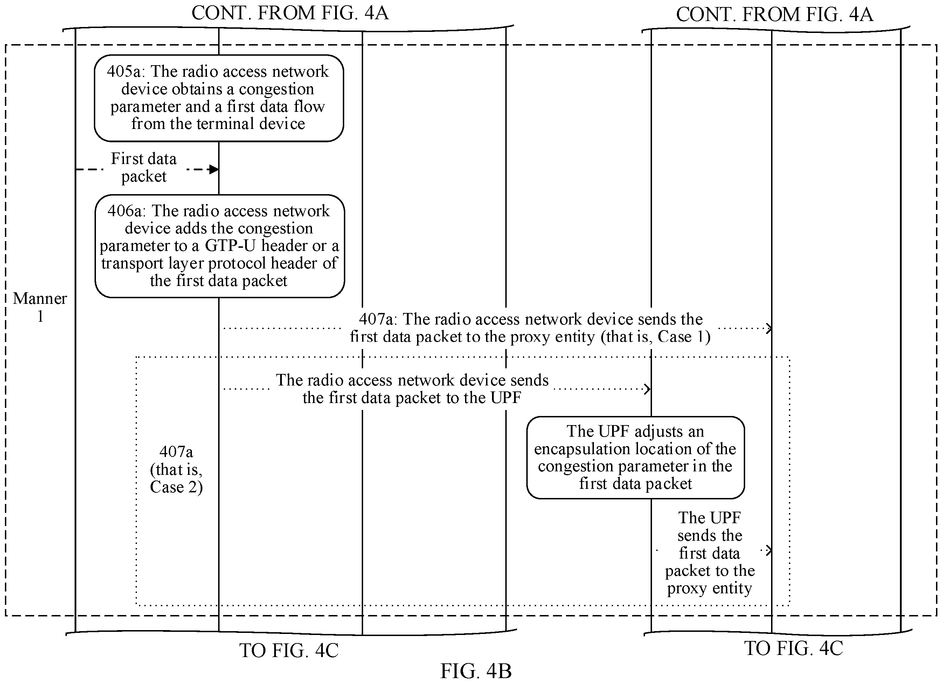

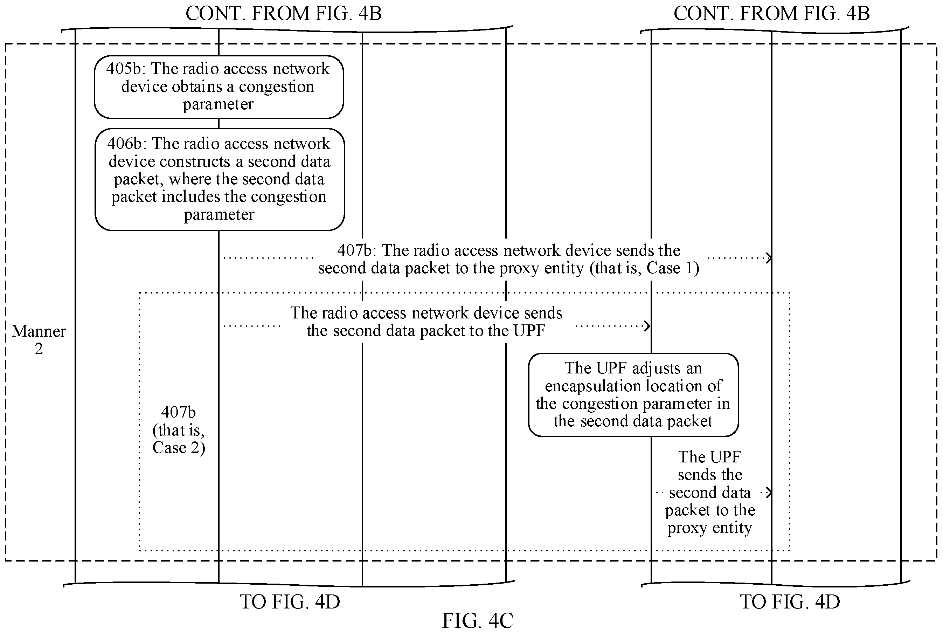

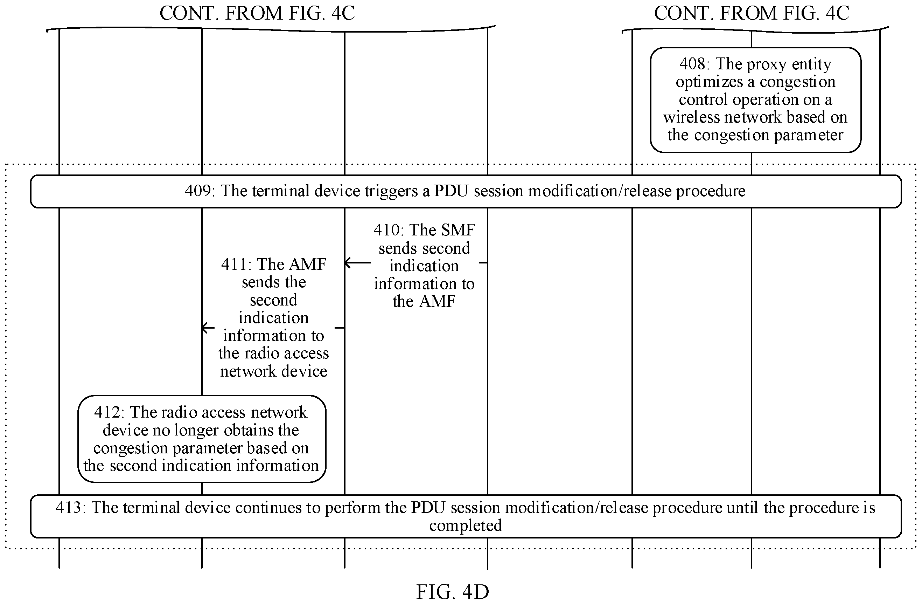

FIG. 4A to FIG. 4D are a schematic flowchart of a communication method applied to an actual network scenario according to an embodiment of this application. For example, the communication method provided in this embodiment of this application is applicable to a scenario in which a terminal device obtains a low-delay service, for example, an edge computing scenario, a proxy entity is newly added on a network side to perform congestion control.

401: The terminal device triggers and completes a protocol data unit (protocol data unit, PDU) session establishment/modification procedure, and a transport layer connection is established between the terminal device and an application server, for example, a TCP connection is established between UE and an AF/AS.

402: The proxy entity enables a proxy function to complete corresponding configuration of a segmented transport layer connection. For example, the proxy entity enables a proxy function, and constructs a segmented transport layer connection (for example, a segmented TCP connection). The segmented transport layer connection includes a transport layer connection from the terminal device to the proxy entity and a transport layer connection from the proxy entity to the AF/AS. It may be understood that, after the proxy entity enables the proxy function, a data packet that carries a congestion parameter can arrive at the proxy entity.

403: An SMF sends indication information to an AMF, where the indication information indicates a radio access network device to obtain a congestion parameter of a radio access network. For example, the SMF requests, by using an Namf_Communication_N1N2MessageTransfer service, the AMF to send the indication information to the radio access network device. The indication information includes information such as an information enabling indication and a data flow identifier. For a specific implementation, refer to the descriptions of the indication information in step 301. Details are not described herein again.

In an implementation, the SMF may send the indication information in the PDU session modification procedure. For example, when the SMF receives a first request message (the first request message is used to request to establish a specific service data flow) from the terminal device, the SMF obtains a QoS requirement of the specific service data flow through mapping based on a session management policy, and determines, based on the QoS requirement, that capability exposure on a RAN side needs to be indicated. In this case, the SMF sends the indication information to the radio access network device by using the AMF. In another implementation, when the proxy entity enables the proxy function and establishes the transport layer connection between the proxy entity and the terminal device, the proxy entity sends a second request message to the SMF. The second request message is used to request the SMF to send an indication message to a RAN side to indicate the radio access network device to enable RAN side information of a specific service data flow. In this case, the SMF may obtain a corresponding QoS flow, and send the indication information to the radio access network device.

404: The AMF sends the indication information to the radio access network device. For example, the AMF sends the indication information to the radio access network device by using an N2 PDU session request. The indication information includes the information such as the information exposure indication and the data flow identifier.

Manner 1: The radio access network device adds the congestion parameter to a GTP-U header, and sends the congestion parameter to the proxy entity in a channel associated mode.

405a: The radio access network device obtains the congestion parameter and a first data flow from the terminal device, where the congestion parameter includes buffer status information and/or a congestion cause value of the radio access network, and the first data flow includes a first data packet. For a specific implementation, refer to the descriptions of the congestion parameter in step 301. Details are not described herein again.

406a: The radio access network device adds the congestion parameter to a GTP-U header of the first data packet.

407a: The radio access network device sends the first data packet to the proxy entity. Specifically, the radio access network device may send the first data packet in the following two cases:
Case 1: The radio access network device directly sends the first data packet to the proxy entity. Correspondingly, the proxy entity receives the first data packet from the radio access network device, and obtains the congestion parameter (including the buffer status information and/or the congestion cause value of the radio access network) in the first data packet.
Case 2: The radio access network device sends the first data packet to a UPF. Correspondingly, the UPF receives the first data packet. The UPF obtains the congestion parameter from the GTP-U header of the first data packet, adjusts an encapsulation location of the congestion parameter in the first data packet, and sends an adjusted first data packet to the proxy entity. Correspondingly, the proxy entity receives the first data packet from the UPF, and obtains the congestion parameter (including the buffer status information and/or the congestion cause value of the radio access network) in the first data packet.

Specifically, in an implementation in which the UPF adjusts the encapsulation location of the congestion parameter in the first data packet, when the encapsulation location of the congestion parameter is the GTP-U header, the UPF adjusts the encapsulation location of the congestion parameter to a transport layer protocol header (for example, a TCP option (option)) or a second tunneling protocol header. The second tunneling protocol is a tunneling protocol (for example, an SRv6 protocol) between the UPF and the proxy entity.

Manner 2: The radio access network device sends the congestion parameter to the proxy entity by constructing a data packet.

405b: The radio access network obtains the congestion parameter, where the congestion parameter includes buffer status information and/or a congestion cause value of the radio access network. For a specific implementation, refer to the descriptions of the congestion parameter in step 301. Details are not described herein again.

406b: The radio access network device constructs a second data packet (for example, an echo data packet), where the second data packet includes the buffer status information and/or the congestion cause value of the radio access network.

407b: The radio access network device sends the second data packet to the proxy entity. Specifically, the radio access network device may send the second data packet in the following two cases:
Case 1: The radio access network device directly sends the second data packet to the proxy entity. Correspondingly, the proxy entity receives the second data packet from the radio access network device, and obtains the congestion parameter (including the buffer status information and/or the congestion cause value of the radio access network) in the second data packet.
Case 2: The radio access network device sends the second data packet to a UPF. Correspondingly, the UPF receives the second data packet. The UPF obtains the congestion parameter from a GTP-U header or a transport layer protocol (for example, TCP) header of the second data packet, adjusts an encapsulation location of the congestion parameter in the second data packet, and sends an adjusted second data packet to the proxy entity. Correspondingly, the proxy entity receives the second data packet from the UPF, and obtains the congestion parameter (including the buffer status information and/or the congestion cause value of the radio access network) in the second data packet.

It may be understood that, for specific implementations of Case 1 and Case 2, refer to Case 1 and Case 2 described in step 407a. Details are not described herein again.

It should be noted that 405a and 405b (or 406a and 406b, or 407a and 407b) are parallel method steps. For example, when Manner 1 is used, steps 405a to 407a are performed. When Manner 2 is used, steps 405b to 407b are performed.

Further, step 408 is further included.

408: The proxy entity optimizes congestion control on a wireless network based on the congestion parameter.

Specifically, the proxy entity optimizes congestion control based on BBR measurement information (for example, information such as a round-trip time RTT, a bandwidth BW, and a data amount) and the congestion parameter (the buffer status information and/or the congestion cause value of the radio access network), and specifically, in a manner that includes but is not limited to the following three manners:
Manner 1: The proxy entity reduces a sending rate of a data transmit end when it is not detected in a measurement periodicity that a round-trip time of a transmission path reaches a minimum delay record, the buffer status information indicates that a queue buffer ratio of the radio access network is greater than or equal to a threshold, and the congestion cause value indicates that a congestion cause is wireless retransmission.
Manner 2: The proxy entity sets a transmit gain coefficient of a data transmit end to a first preset value, and sets a size of a congestion window to a second preset value when it is not detected in a measurement periodicity that a round-trip time of a transmission path reaches a minimum delay record, and the buffer status information indicates that a queue buffer ratio of the radio access network is less than or equal to a threshold.
Manner 3: The proxy entity sets a transmit gain coefficient of a data transmit end to a first preset value, and sets a size of a congestion window to a second preset value when the buffer status information indicates that a queue buffer ratio of the radio access network is greater than or equal to a threshold, and the congestion cause value indicates that a congestion cause is multi-user contention.

For specific implementations of Manner 1 to Manner 3, refer to the corresponding descriptions in step 303. Details are not described herein again. It may be understood that the proxy entity in this embodiment of this application optimizes an original BBR congestion control mechanism, or may reuse the original BBR congestion control mechanism, for example, may directly switch to a PROBE_RTT state when performing congestion control.

Optionally, steps 409 to 413 are further included.

409: The terminal device triggers a PDU session modification/release procedure.

The PDU session modification/release procedure may be triggered by the terminal device, or optionally, may be triggered by a policy control function (policy control function, PCF), the SMF, or the like. The SMF may trigger the PDU session modification/release procedure because subscription data changes. Alternatively, the SMF may trigger the PDU session modification/release procedure based on a request of the proxy entity. For example, if the proxy entity is about to disable congestion control optimization for the specific service data flow, and does not need enabling information on the RAN side, the proxy entity may request the SMF to trigger the PDU session modification/release procedure.

410: The SMF sends second indication information to the AMF. The second indication information indicates the radio access network device to disable a function and stop obtaining the congestion parameter. For example, the SMF requests, by using the Namf_Communication_N1N2MessageTransfer service, the AMF to send the second indication information to the radio access network device. The second indication information includes information such as an information disabling indication and a data flow identifier, and the information disabling indication indicates the radio access network device to disable a function of obtaining the congestion parameter.

Specifically, the SMF may send the second indication information in the PDU session modification/release procedure. In an implementation, if the SMF receives the request of the proxy entity (for example, the proxy entity is about to disable congestion control on the specific service data flow, and does not need the enabling information on the RAN side), the SMF sends the second indication information to the AMF. In another implementation, when the subscription data of the terminal device changes (or a QoS requirement needs to be reduced), and the SMF determines not to provide congestion control on the specific service data flow of the terminal device, the SMF sends the second indication information to the AMF. In still another implementation, when the terminal device requests to release a PDU session, if RAN information enabling is enabled for a data flow carried on the PDU session, the SMF may send the second indication information to the AMF.

411: The AMF sends the second indication information to the radio access network device. For example, the AMF sends the second indication information to the radio access network device by using an N2 PDU session request, to indicate the radio access network device to disable the function and stop obtaining the congestion parameter.

412: The radio access network device stops obtaining the congestion parameter based on the second indication information, for example, stops obtaining the buffer status information and/or the congestion cause value of the radio access network.

413: The terminal device continues to perform the PDU session modification/release procedure until the procedure is completed.

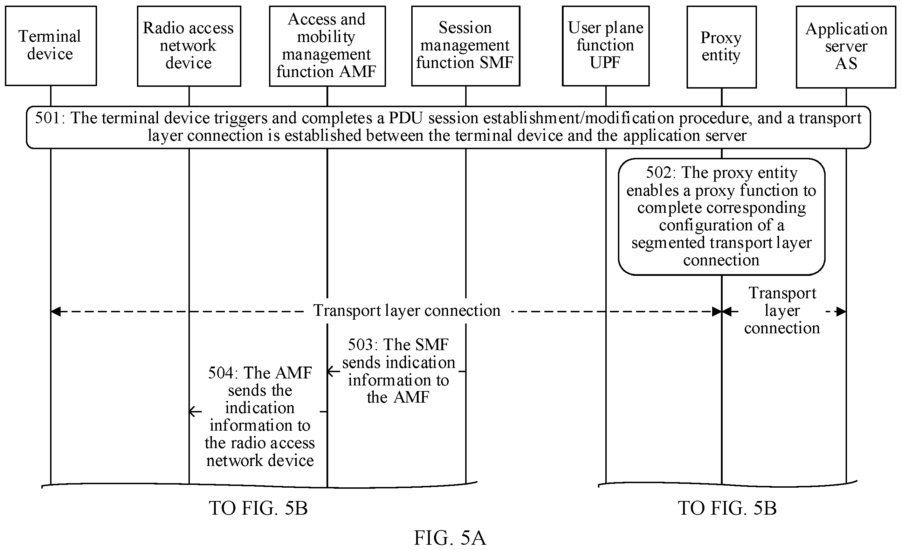

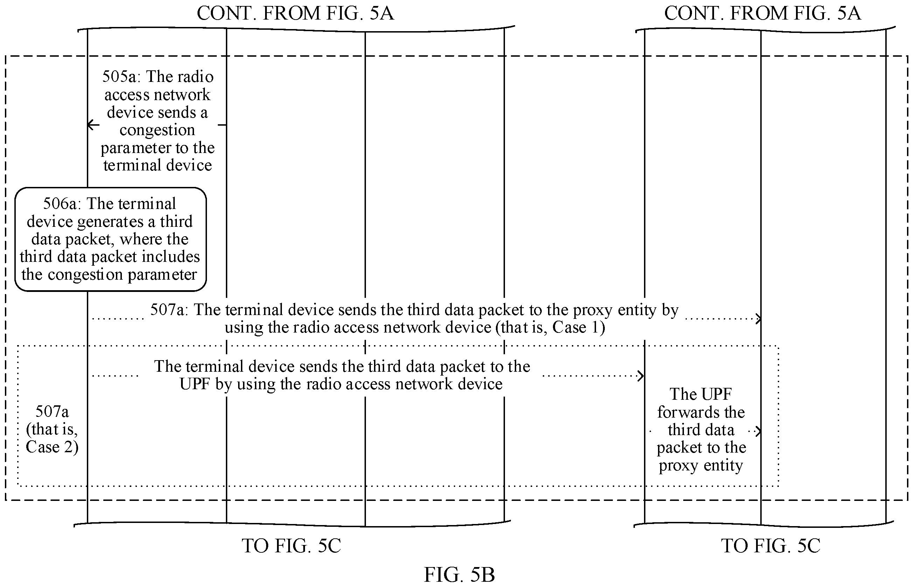

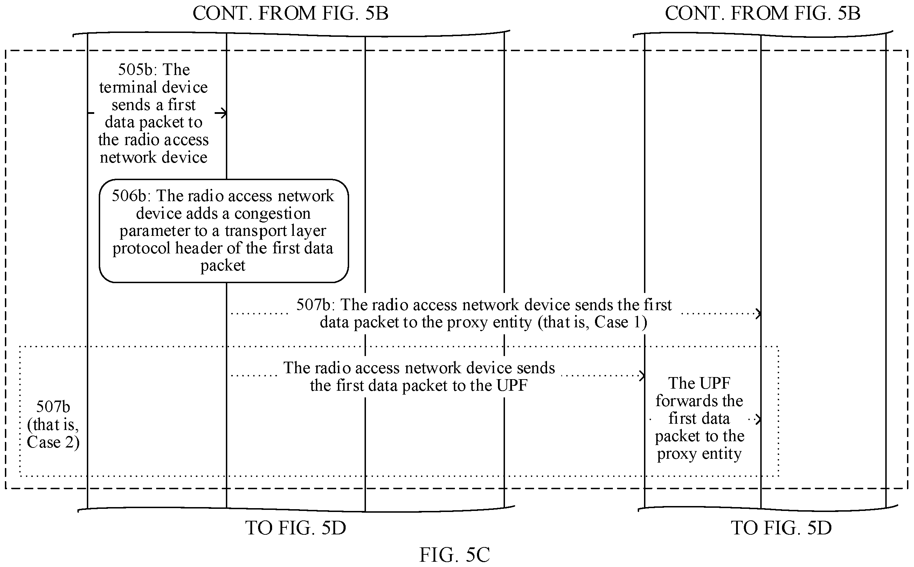

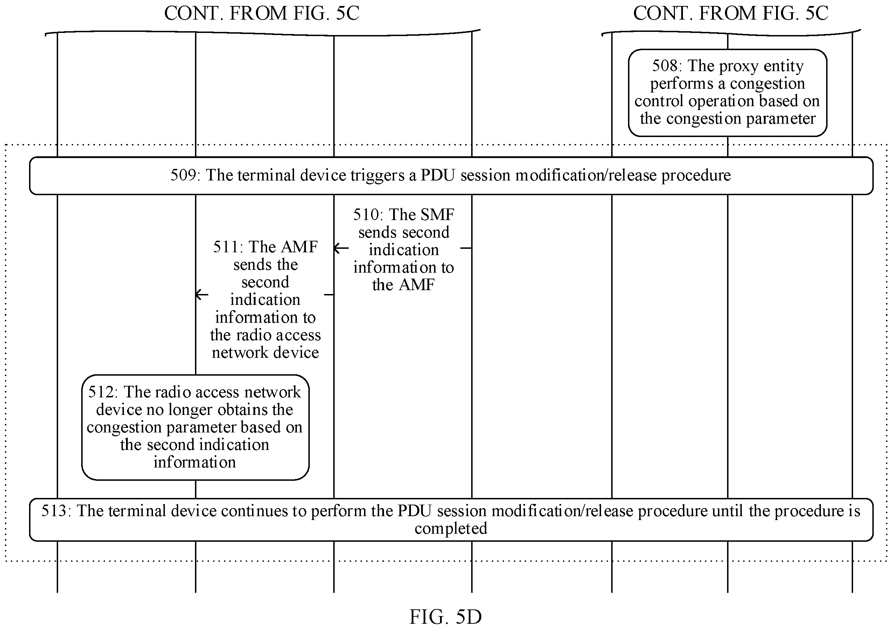

FIG. 5A to FIG. 5D are another schematic flowchart of a communication method applied to an actual network scenario according to an embodiment of this application. For example, the communication method provided in this embodiment of this application is applicable to a scenario in which a terminal device obtains a low-delay service, for example, an edge computing scenario, a proxy entity is newly added on a network side to perform congestion control. By comparison with the embodiment in FIG. 4A to FIG. 4D, in the embodiment in FIG. 5A to FIG. 5D, a radio access network device sends a congestion parameter to the proxy entity in different manners.

501: The terminal device triggers and completes a PDU session establishment/modification procedure, and a transport layer connection is established between the terminal device and an application server.

502: The proxy entity enables a proxy function to complete corresponding configuration of a segmented transport layer connection.

503: An SMF sends indication information to an AMF. The indication information indicates the radio access network device to obtain a congestion parameter of a radio access network.

504: The AMF sends the indication information to the radio access network device.

For specific implementations of steps 501 to 504, refer to the corresponding descriptions in steps 401 to 404 in the embodiment in FIG. 4A to FIG. 4D. Details are not described herein again.

Manner 3: The radio access network device provides the congestion parameter for the terminal device. The terminal device provides the congestion parameter for the proxy entity by using a third data packet.

505a: The radio access network device sends the congestion parameter to the terminal device. For example, the radio access network device may send the congestion parameter to the terminal device by using radio resource control (radio resource control, RRC) signaling, or may add the congestion parameter to a downlink data packet (for example, an option in the downlink data packet) from an AS. The radio access network device sends the downlink data packet to the terminal device.

506a: The terminal device generates a third data packet, where the third data packet includes the congestion parameter. The third data packet may be an uplink data packet that originally needs to be sent by the terminal device (that is, the third data packet includes service data). The third data packet may alternatively be a data packet reconstructed by the terminal device (that is, the third data packet does not include service data). This is not limited in this embodiment.

507a: The terminal device sends the third data packet to the proxy entity by using the radio access network device. Specifically, the radio access network device may send the third data packet in the following two cases:
Case 1: The radio access network device directly sends the third data packet to the proxy entity. Correspondingly, the proxy entity receives the third data packet from the radio access network device, and obtains the congestion parameter (including buffer status information and/or a congestion cause value of the radio access network) in the third data packet.
Case 2: The radio access network device sends the third data packet to a UPF. Correspondingly, the UPF receives the third data packet. In Case 2 of this embodiment, the UPF does not need to adjust an encapsulation location of the congestion parameter in the third data packet. That is, when the UPF and the proxy entity are separately deployed, the UPF in Case 2 in this embodiment is configured to forward the third data packet to the proxy entity, and does not process the third data packet.

It may be understood that, for specific implementations of Case 1 and Case 2, refer to Case 1 and Case 2 described in step 407a in the embodiment in FIG. 4A to FIG. 4D. Details are not described herein again.

Manner 4: The radio access network device adds the congestion parameter to a transport layer protocol header, and sends the congestion parameter to the proxy entity in a channel associated mode.

505b: The terminal device sends a first data packet to the radio access network device.

506b: The radio access network device adds the congestion parameter to the transport layer protocol header of the first data packet. Specifically, the radio access network device adds the congestion parameter to an option field of a transport layer protocol in the first data packet. It should be noted that the option field of the transport layer protocol in this embodiment may be an option field of a TCP protocol, or may be an option field of another transport layer protocol. This is not specifically limited herein. In this manner of adding the congestion parameter, a UPF does not need to adjust the encapsulation location of the congestion parameter.

507b: The radio access network device sends the first data packet to the proxy entity. Specifically, the radio access network device may send the first data packet in the following two cases:
Case 1: The radio access network device directly sends the first data packet to the proxy entity. Correspondingly, the proxy entity receives the first data packet from the radio access network device, and obtains the congestion parameter (including buffer status information and/or a congestion cause value of the radio access network) in the first data packet.
Case 2: The radio access network device sends the first data packet to the UPF. Correspondingly, the UPF receives the first data packet. In Case 2 of this embodiment, the UPF does not need to adjust the encapsulation location of the congestion parameter in the first data packet. That is, when the UPF and the proxy entity are separately deployed, the UPF in Case 2 in this embodiment is configured to forward the first data packet to the proxy entity, and does not process the first data packet.

It may be understood that, for specific implementations of Case 1 and Case 2, refer to Case 1 and Case 2 described in step 407a in the embodiment in FIG. 4A to FIG. 4D. Details are not described herein again.

Further, step 508 is further included.

508: The proxy entity optimizes congestion control on a wireless network based on the congestion parameter. For a specific implementation of step 508, refer to the corresponding descriptions in step 408 in the embodiment in FIG. 4A to FIG. 4D. Details are not described herein again.

Optionally, steps 509 to 513 are further included.

509: The terminal device triggers a PDU session modification/release procedure.

510: The SMF sends second indication information to the AMF. The second indication information indicates the radio access network device to disable a function and stop obtaining the congestion parameter.

511: The AMF sends the second indication information to the radio access network device.

512: The radio access network device stops obtaining the congestion parameter based on the second indication information.

513: The terminal device continues to perform the PDU session modification/release procedure until the procedure is completed.

It may be understood that, for specific implementations of steps 509 to 513, refer to the corresponding descriptions in steps 409 to 413 in the embodiment in FIG. 4A to FIG. 4D. Details are not described herein again.

To implement functions in the method provided in embodiments of this application, an apparatus or a device provided in embodiments of this application may include a hardware structure and/or a software module. The foregoing functions are implemented in a form of a hardware structure, a software module, or a combination of a hardware structure and a software module. Whether a function in the foregoing functions is performed by using the hardware structure, the software module, or the combination of the hardware structure and the software module depends on particular applications and design constraints of the technical solutions. In embodiments of this application, division into modules is an example, and is merely a logical function division. In actual implementation, another division manner may be used. In addition, functional modules in embodiments of this application may be integrated into one processor, or may exist alone physically, or two or more modules may be integrated into one module. The integrated module may be implemented in a form of hardware, or may be implemented in a form of a software functional module.

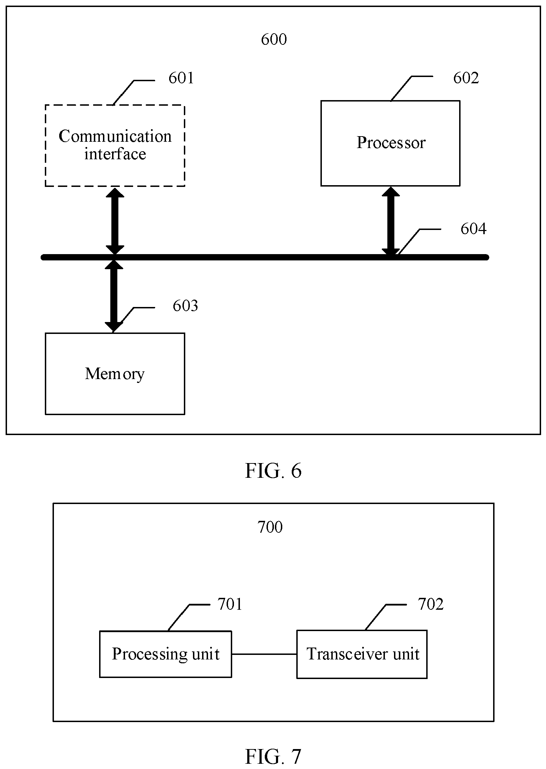

FIG. 6 shows a device 600 according to an embodiment of this application. The device 600 is configured to implement the communication methods in the foregoing method embodiments. The device may be a chip system. The device 600 may include a communication interface 601. The communication interface may be, for example, a transceiver, an interface, a bus, a circuit, or an apparatus that can implement receiving and sending functions. The communication interface 601 is configured to communicate with another device by using a transmission medium, so that an apparatus in the device 600 may communicate with the another device. The device 600 may include at least one processor 602, configured to implement functions in the communication method provided in embodiments of this application. It may be understood that the communication interface 601 may be a part of the processor 602.

For example, the processor 602 and the communication interface 601 are configured to implement the methods performed by the radio access network device in the method embodiments corresponding to FIG. 3 to FIG. 5A to FIG. 5D. That is, the device 600 may be a radio access network device, an apparatus in the radio access network device, or an apparatus that can be used in combination with the radio access network device. The processor 602 is configured to obtain a congestion parameter of a radio access network based on indication information, where the indication information indicates the radio access network device to obtain the congestion parameter of the radio access network, and the congestion parameter includes buffer status information and/or a congestion cause value of the radio access network. The communication interface 601 is configured to send the congestion parameter to a proxy entity. For a specific execution procedure, refer to detailed descriptions of operations performed by the radio access network device in the method examples in FIG. 3 to FIG. 5A to FIG. 5D. Details are not described herein again. In this example, in the steps performed by the communication interface 601 and the processor 602, the congestion parameter (including the buffer status information and/or the congestion cause value of the radio access network) of the radio access network may be obtained through capability exposure of the radio access network device, so as to determine whether congestion occurs in the radio access network; and the congestion parameter is sent to the proxy entity, so as to help implement congestion control on a wireless network.

For example, the processor 602 and the communication interface 601 are configured to implement the methods performed by the proxy entity in the method embodiments corresponding to FIG. 3 to FIG. 5A to FIG. 5D. That is, the device 600 may be a proxy entity, an apparatus in the proxy entity, or an apparatus that can be used in combination with the proxy entity. The communication interface 601 is configured to receive a congestion parameter of a radio access network, where the congestion parameter includes buffer status information and/or a congestion cause value of the radio access network. The processor 602 is configured to perform a congestion control operation based on the congestion parameter. For a specific execution procedure, refer to detailed descriptions of operations performed by the proxy entity in the method examples in FIG. 3 to FIG. 5A to FIG. 5D. Details are not described herein again. In this example, in the steps performed by the communication interface 601 and the processor 602, the proxy entity may identify the congestion parameter of the radio access network, and perform congestion control based on the congestion parameter, so that congestion control on a wireless network can be implemented.

For example, the processor 602 and the communication interface 601 are configured to implement the methods performed by the user plane function network element in the method embodiments corresponding to FIG. 3 to FIG. 5A to FIG. 5D. That is, the device 600 may be a user plane function network element, an apparatus in the user plane function network element, or an apparatus that can be used in combination with the user plane function network element. The communication interface 601 is configured to receive a data packet, where the data packet includes a congestion parameter of a radio access network. The processor 602 is configured to adjust an encapsulation location of the congestion parameter in the data packet. The communication interface 601 is further configured to send an adjusted data packet to a proxy entity. For a specific execution procedure, refer to detailed descriptions of operations performed by the user plane function network element in the method examples in FIG. 3 to FIG. 5A to FIG. 5D. Details are not described herein again. In this example, in the steps performed by the communication interface 601 and the processor 602, the encapsulation location of the congestion parameter in the data packet may be adjusted, so as to help the proxy entity identify the congestion parameter.

For example, the processor 602 and the communication interface 601 are configured to implement the methods performed by the terminal device in the method embodiments corresponding to FIG. 3 to FIG. 5A to FIG. 5D. That is, the device 600 may be a terminal device, an apparatus in the terminal device, or an apparatus that can be used in combination with the terminal device. The communication interface 601 is configured to receive a congestion parameter of a radio access network. The processor 602 is configured to generate a third data packet, where the third data packet includes the congestion parameter. The communication interface 601 is further configured to send the third data packet to a proxy entity. For a specific execution procedure, refer to detailed descriptions of operations performed by the terminal device in the method examples in FIG. 3 to FIG. 5A to FIG. 5D. Details are not described herein again. In this example, in the steps performed by the communication interface 601 and the processor 602, the terminal device may generate or reconstruct the third data packet based on the congestion parameter, so that the terminal device sends congestion information to the proxy entity, without adjusting an encapsulation location of the congestion parameter.

The device 600 may further include at least one memory 603, configured to store program instructions and/or data. In an implementation, the memory 603 is coupled to the processor 602. The coupling in embodiments of this application may be an indirect coupling or a communication connection between apparatuses, units, or modules in an electrical form, a mechanical form, or another form, and is used for information exchange between the apparatuses, the units, or the modules. The processor 602 may cooperate with the memory 603. The processor 602 may execute the program instruction stored in the memory 603. At least one of the at least one memory may be included in the processor.

A specific connection medium between the communication interface 601, the processor 602, and the memory 603 is not limited in embodiments of this application. In embodiments of this application, in FIG. 6, the memory 603, the processor 602, and the communication interface 601 are connected by using a bus 604. The bus is represented by using a thick line in FIG. 6. A connection manner between other components is merely an example for description, and is not limited thereto. The bus may be classified into an address bus, a data bus, a control bus, and the like. For ease of representation, only one thick line represents the bus in FIG. 6, but this does not mean that there is only one bus or only one type of bus.

In embodiments of this application, the processor may be a general-purpose processor, a digital signal processor, an application-specific integrated circuit, a field programmable gate array or another programmable logic device, a discrete gate or transistor logic device, or a discrete hardware component, and may implement or execute the methods, steps, and logical block diagrams disclosed in embodiments of this application. The general purpose processor may be a microprocessor or any conventional processor or the like. The steps of the method disclosed with reference to embodiments of this application may be directly performed by a hardware processor, or may be performed by using a combination of hardware in the processor and a software module.

In embodiments of this application, the memory may be a non-volatile memory, a hard disk drive (hard disk drive, HDD) or a solid-state drive (solid-state drive, SSD), or may be a volatile memory (volatile memory), for example, a random access memory (random-access memory, RAM). The memory is any other medium that can carry or store expected program code in a form of instructions or a data structure and that can be accessed by a computer, but is not limited thereto. The memory in embodiments of this application may alternatively be a circuit or any other apparatus that can implement a storage function, and is configured to store the program instructions and/or the data.

FIG. 7 shows an apparatus 700 according to an embodiment of this application. In an implementation, the apparatus may include corresponding modules for performing the methods/operations/steps/actions described in the examples corresponding to FIG. 3 to FIG. 5A to FIG. 5D. The module may be a hardware circuit, or may be software, or may be implemented by a hardware circuit in combination with software. In an implementation, the apparatus may include a processing unit 701 and a transceiver unit 702.

For example, the apparatus 700 may be a radio access network device, an apparatus in the radio access network device, or an apparatus that can be used in combination with the radio access network device. The processing unit 701 is configured to obtain a congestion parameter of a radio access network based on indication information. The indication information indicates the radio access network device to obtain the congestion parameter of the radio access network. The congestion parameter includes buffer status information and/or a congestion cause value of the radio access network. The transceiver unit 702 is configured to send the congestion parameter to a proxy entity. For a specific execution procedure, refer to detailed descriptions of operations performed by the radio access network device in the method examples in FIG. 3 to FIG. 5A to FIG. 5D. Details are not described herein again. In this example, in the steps performed by the processing unit 701 and the transceiver unit 702, the congestion parameter (including the buffer status information and/or the congestion cause value of the radio access network) of the radio access network may be obtained through capability exposure of the radio access network device, so as to determine whether congestion occurs in the radio access network; and the congestion parameter is sent to the proxy entity, so as to help implement congestion control on a wireless network.

For example, the apparatus 700 may be a proxy entity, an apparatus in the proxy entity, or an apparatus that can be used in combination with the proxy entity. The transceiver unit 702 is configured to receive a congestion parameter of a radio access network, where the congestion parameter includes buffer status information and/or a congestion cause value of the radio access network. The processing unit 701 is configured to perform a congestion control operation based on the congestion parameter. For a specific execution procedure, refer to detailed descriptions of operations performed by the proxy entity in the method examples in FIG. 3 to FIG. 5A to FIG. 5D. Details are not described herein again. In this example, in the steps performed by the transceiver unit 702 and processing unit 701, the proxy entity may identify the congestion parameter of the radio access network, and perform congestion control based on the congestion parameter, so that congestion control on a wireless network can be implemented.

For example, the apparatus 700 may be a user plane function network element, an apparatus in the user plane function network element, or an apparatus that can be used in combination with the user plane function network element. The transceiver unit 702 is configured to receive a data packet, where the data packet includes a congestion parameter of a radio access network. The processing unit 701 is configured to adjust an encapsulation location of the congestion parameter in the data packet. The transceiver unit 702 is further configured to send an adjusted data packet to a proxy entity. For a specific execution procedure, refer to detailed descriptions of operations performed by the user plane function network element in the method examples in FIG. 3 to FIG. 5A to FIG. 5D. Details are not described herein again. In this example, in the steps performed by the transceiver unit 702 and the processing unit 701, the encapsulation location of the congestion parameter in the data packet may be adjusted, so as to help the proxy entity identify the congestion parameter.

For example, the apparatus 700 may be a terminal device, an apparatus in the terminal device, or an apparatus that can be used in combination with the terminal device. The transceiver unit 702 is configured to receive a congestion parameter of a radio access network. The processing unit 701 is configured to generate a third data packet, where the third data packet includes the congestion parameter. The transceiver unit 702 is further configured to send the third data packet to a proxy entity. For a specific execution procedure, refer to detailed descriptions of operations performed by the terminal device in the method examples in FIG. 3 to FIG. 5A to FIG. 5D. Details are not described herein again. In this example, in the steps performed by the transceiver unit 702 and the processing unit 701, the terminal device may generate or reconstruct the third data packet based on the congestion parameter, so that the terminal device sends congestion information to the proxy entity, without adjusting an encapsulation location of the congestion parameter.

An embodiment of this application provides a computer-readable storage medium. The computer-readable storage medium stores a program or instructions. When the program or the instructions are run on a computer, the computer is enabled to perform the communication methods shown in FIG. 3 to FIG. 5A to FIG. 5D.

An embodiment of this application provides a chip or a chip system. The chip or the chip system includes at least one processor and an interface. The interface and the at least one processor are interconnected by using a line. The at least one processor is configured to run a computer program or instructions, to perform the communication methods shown in FIG. 3 to FIG. 5A to FIG. 5D.

The interface in the chip may be an input/output interface, a pin, a circuit, or the like.

The chip system in the foregoing aspect may be a system on chip (system on chip, SoC), a baseband chip, or the like. The baseband chip may include a processor, a channel encoder, a digital signal processor, a modem, an interface module, and the like.

In an implementation, the chip or the chip system described above in this application further includes at least one memory, and the at least one memory stores instructions. The memory may be a storage unit inside the chip, for example, a register or a cache, or may be a storage unit (for example, a read-only memory or a random access memory) of the chip.

All or some of the technical solutions provided in embodiments of this application may be implemented through software, hardware, firmware, or any combination thereof. When the software is used for implementation, all or some of embodiments may be implemented in a form of a computer program product. The computer program product includes one or more computer instructions. When the computer program instructions are loaded and executed on the computer, all or some of the procedures or functions according to embodiments of this application are generated. The computer may be a general-purpose computer, a dedicated computer, a computer network, a network device, a terminal device, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium, or the like.

In embodiments of this application, on the premise that there is no logical conflict, embodiments may be mutually referenced. For example, methods and/or terms in the method embodiments may be mutually referenced. For example, functions and/or terms in the apparatus embodiments may be mutually referenced. For example, functions and/or terms in the apparatus embodiments and the method embodiments may be mutually referenced.

It is clear that a person skilled in the art can make various modifications and variations to this application without departing from the scope of this application. This application is intended to cover these modifications and variations of this application provided that they fall within the scope of protection defined by the following claims and their equivalent technologies.

## Claims

1. A communication method, comprising:
obtaining, by a radio access network device, a congestion parameter of a radio access network based on indication information, wherein the indication information indicates the radio access network device to obtain the congestion parameter of the radio access network, and the congestion parameter comprises buffer status information and/or a congestion cause value of the radio access network;
sending, by the radio access network device, the congestion parameter to a proxy entity;
receiving, by the proxy entity, the congestion parameter; and
performing, by the proxy entity, a congestion control operation based on the congestion parameter.

2. The method according to claim 1, wherein the sending, by the radio access network device, the congestion parameter to a proxy entity comprises:
sending, by the radio access network device, the congestion parameter to the proxy entity in a channel associated mode, wherein the channel associated mode is adding the congestion parameter to a first data flow from a terminal device.

3. The method according to claim 2, wherein the channel associated mode is adding the congestion parameter to a general packet radio service tunneling protocol user plane header or a transport layer protocol header of a first data packet in the first data flow.

4. The method according to claim 1, wherein the sending, by the radio access network device, the congestion parameter to a proxy entity comprises:
generating, by the radio access network device, a second data packet, wherein the second data packet comprises the congestion parameter; and
sending, by the radio access network device, the second data packet to the proxy entity.

5. The method according to claim 1, wherein the sending, by the radio access network device, the congestion parameter to a proxy entity comprises:
sending, by the radio access network device, the congestion parameter to a terminal device;
receiving, by the radio access network device, a third data packet from the terminal device, wherein the third data packet comprises the congestion parameter; and
sending, by the radio access network device, the third data packet to the proxy entity.

6. The method according to any one of claims 1 to 5, wherein the sending, by the radio access network device, the congestion parameter to a proxy entity comprises:
sending, by the radio access network device, the congestion parameter to the proxy entity by using a user plane function network element.

7. The method according to any one of claims 1 to 5, wherein the method further comprises:
receiving, by the radio access network device, indication information from a session management function entity.

8. The method according to claim 1, wherein the performing, by the proxy entity, a congestion control operation based on the congestion parameter comprises:
performing, by the proxy entity, the congestion control operation based on measurement information and the congestion parameter, wherein the measurement information comprises a bottleneck bandwidth of a transmission path between the proxy entity and a terminal device and/or a round-trip time of the transmission path.

9. The method according to claim 8, wherein the performing, by the proxy entity, the congestion control operation based on measurement information and the congestion parameter comprises:
reducing, by the proxy entity, a sending rate of a data transmit end when it is not detected in a measurement periodicity that the round-trip time of the transmission path reaches a minimum delay record, the buffer status information indicates that a queue buffer ratio of the radio access network is greater than or equal to a threshold, and the congestion cause value indicates that a congestion cause is wireless retransmission; or
setting, by the proxy entity, a transmit gain coefficient of a data transmit end to a first preset value, and setting a size of a congestion window to a second preset value when it is not detected in a measurement periodicity that the round-trip time of the transmission path reaches a minimum delay record, and the buffer status information indicates that a queue buffer ratio of the radio access network is less than or equal to a threshold.

10. The method according to claim 1, wherein the performing, by the proxy entity, a congestion control operation based on the congestion parameter comprises:
setting, by the proxy entity, a transmit gain coefficient of a data transmit end to a first preset value, and setting a size of a congestion window to a second preset value when the buffer status information indicates that a queue buffer ratio of the radio access network is greater than or equal to a threshold, and the congestion cause value indicates that a congestion cause is multi-user contention.

11. The method according to any one of claims 1 to 10, wherein the buffer status information of the radio access network comprises buffer status information of a media access control layer and/or buffer status information of a radio link control layer, and the congestion cause value comprises multi-user contention or wireless retransmission.

12. The method according to any one of claims 1 to 10, wherein the congestion parameter is carried in the general packet radio service tunneling protocol user plane header, or the congestion parameter is carried in the transport layer protocol header.

13. The method according to any one of claims 1 to 12, wherein the indication information comprises a data flow identifier, the data flow identifier identifies a first data flow, and that the indication information indicates the radio access network device to obtain the congestion parameter of the radio access network comprises: the indication information indicates the radio access network device to obtain a congestion parameter in the first data flow.

14. A communication method, comprising:
obtaining, by a radio access network device, a congestion parameter of a radio access network based on indication information, wherein the indication information indicates the radio access network device to obtain the congestion parameter of the radio access network, and the congestion parameter comprises buffer status information and/or a congestion cause value of the radio access network; and
sending, by the radio access network device, the congestion parameter to a proxy entity.

15. The method according to claim 14, wherein the sending, by the radio access network device, the congestion parameter to a proxy entity comprises:
sending, by the radio access network device, the congestion parameter to the proxy entity in a channel associated mode, wherein the channel associated mode is adding the congestion parameter to a first data flow from a terminal device.

16. The method according to claim 15, wherein the channel associated mode is adding the congestion parameter to a general packet radio service tunneling protocol user plane header or a transport layer protocol header of a first data packet in the first data flow.

17. The method according to claim 14, wherein the sending, by the radio access network device, the congestion parameter to a proxy entity comprises:
generating, by the radio access network device, a second data packet, wherein the second data packet comprises the congestion parameter; and
sending, by the radio access network device, the second data packet to the proxy entity.

18. The method according to claim 14, wherein the sending, by the radio access network device, the congestion parameter to a proxy entity comprises:
sending, by the radio access network device, the congestion parameter to a terminal device;
receiving, by the radio access network device, a third data packet from the terminal device, wherein the third data packet comprises the congestion parameter; and
sending, by the radio access network device, the third data packet to the proxy entity.

19. The method according to any one of claims 14 to 18, wherein the sending, by the radio access network device, the congestion parameter to a proxy entity comprises:
sending, by the radio access network device, the congestion parameter to the proxy entity by using a user plane function network element.

20. The method according to any one of claims 14 to 18, wherein the method further comprises:
receiving, by the radio access network device, indication information from a session management function entity.

21. The method according to any one of claims 14 to 20, wherein the buffer status information of the radio access network comprises buffer status information of a media access control layer and/or buffer status information of a radio link control layer, and the congestion cause value comprises multi-user contention or wireless retransmission.

22. The method according to any one of claims 14 to 21, wherein the indication information comprises a data flow identifier, the data flow identifier identifies a first data flow, and that the indication information indicates the radio access network device to obtain the congestion parameter of the radio access network comprises: the indication information indicates the radio access network device to obtain a congestion parameter in the first data flow.

23. A communication method, comprising:
receiving, by a proxy entity, a congestion parameter of a radio access network, wherein the congestion parameter comprises buffer status information and/or a congestion cause value of the radio access network; and
performing, by the proxy entity, a congestion control operation based on the congestion parameter.

24. The method according to claim 23, wherein the performing, by the proxy entity, a congestion control operation based on the congestion parameter comprises:
performing, by the proxy entity, the congestion control operation based on measurement information and the congestion parameter, wherein the measurement information comprises a bottleneck bandwidth of a transmission path between the proxy entity and a terminal device and/or a round-trip time of the transmission path.

25. The method according to claim 24, wherein the performing, by the proxy entity, the congestion control operation based on measurement information and the congestion parameter comprises:
reducing, by the proxy entity, a sending rate of a data transmit end when it is not detected in a measurement periodicity that the round-trip time of the transmission path reaches a minimum delay record, the buffer status information indicates that a queue buffer ratio of the radio access network is greater than or equal to a threshold, and the congestion cause value indicates that a congestion cause is wireless retransmission; or
setting, by the proxy entity, a transmit gain coefficient of a data transmit end to a first preset value, and setting a size of a congestion window to a second preset value when it is not detected in a measurement periodicity that the round-trip time of the transmission path reaches a minimum delay record, and the buffer status information indicates that a queue buffer ratio of the radio access network is less than or equal to a threshold.

26. The method according to claim 23, wherein the performing, by the proxy entity, a congestion control operation based on the congestion parameter comprises:
setting, by the proxy entity, a transmit gain coefficient of a data transmit end to a first preset value, and setting a size of a congestion window to a second preset value when the buffer status information indicates that a queue buffer ratio of the radio access network is greater than or equal to a threshold, and the congestion cause value indicates that a congestion cause is multi-user contention.

27. The method according to any one of claims 23 to 26, wherein the congestion parameter is carried in a general packet radio service tunneling protocol user plane header, or the congestion parameter is carried in a transport layer protocol header.

28. The method according to any one of claims 23 to 27, wherein the buffer status information of the radio access network comprises buffer status information of a media access control layer and/or buffer status information of a radio link control layer, and the congestion cause value comprises multi-user contention or wireless retransmission.

29. A communication method, comprising:
receiving, by a user plane function network element, a data packet, wherein the data packet comprises a congestion parameter of a radio access network;
adjusting, by the user plane function network element, an encapsulation location of the congestion parameter in the data packet; and
sending, by the user plane function network element, an adjusted data packet to a proxy entity.

30. The method according to claim 29, wherein the adjusting, by the user plane function network element, an encapsulation location of the congestion parameter in the data packet comprises:
when the encapsulation location of the congestion parameter is a general packet radio service tunneling protocol user plane header, adjusting the encapsulation location of the congestion parameter to a transport layer protocol header or a second tunneling protocol header; or
when the encapsulation location of the congestion parameter is a transport layer protocol header, adjusting the encapsulation location of the congestion parameter to a second tunneling protocol header.

31. A communication method, comprising:
receiving, by a terminal device, a congestion parameter of a radio access network;
generating, by the terminal device, a third data packet, wherein the third data packet comprises the congestion parameter; and
sending, by the terminal device, the third data packet to a proxy entity.

32. A communication system, comprising a radio access network device and a proxy entity, wherein
the radio access network device is configured to perform a function of the radio access network device in the communication method according to any one of claims 1 to 13; and
the proxy entity is configured to perform a function of the proxy entity in the communication method according to any one of claims 1 to 13.

33. The system according to claim 32, wherein the communication system further comprises a user plane function network element, and the user plane function network element is configured to perform the method according to claim 29 or 30.

34. The system according to claim 32, wherein the communication system further comprises a session management function entity, and the session management function entity is configured to send indication information to the radio access network device.

35. The system according to claim 32, wherein the communication system further comprises a terminal device, and the terminal device is configured to perform the method according to claim 31.

36. A communication apparatus, comprising one or more units, configured to perform the method according to any one of claims 14 to 31.

37. A communication apparatus, comprising a processor, configured to perform the method according to any one of claims 14 to 31.

38. A communication system, comprising a plurality of communication apparatuses, wherein the plurality of communication apparatuses comprise one or more communication apparatuses according to claim 36 or 37.

39. A computer-readable storage medium, wherein the computer-readable storage medium stores a computer program, and when the computer program is executed by a processor, the method according to any one of claims 1 to 31 is implemented.

40. A computer program product, comprising one or more computer instructions, wherein the computer program instructions are executed by a computer to implement the method according to any one of claims 1 to 31.
